# EUROPEAN PATENT SPECIFICATION

(11) **EP 2 395 833 B1**
(45) Date of publication and mention of the grant of the patent: **28.06.2017**
(21) Application number: 10703286.4
(22) Date of filing: 11.02.2010
(51) Int. Cl.: A01N 25/32, A01N 37/38

(54) **DIMETHOMORPH AS SAFENER FOR PESTICIDES WITH PHYTOTOXIC EFFECTS**
DIMETHOMORPH ALS SAFENER FÜR PESTIZIDE MIT PHYTOTOXISCHEN WIRKUNGEN
DIMETHOMORPHE UTILISE COMME PHYTOPROTECTEUR POUR DES PESTICIDES PRESENTANT DES EFFETS PHYTOTOXIQUES

(30) Priority: 11.02.2009 EP 09152608
(43) Date of publication of application: 21.12.2011
(73) Proprietor: BASF SE, 67056 Ludwigshafen am Rhein (DE)
(72) Inventor: WILHELM, Ronald, 65719 Hofheim (DE); HEGER, Martin, 36145 Hofbieber (DE); JAMET, Laurent, 69009 Lyon (FR)
(86) International application number: PCT/EP2010/051728
(87) International publication number: WO 2010/092119

(56) References cited:
- WO-A1-95/03696
- WO-A1-97/41727
- WO-A2-2009/098228
- CN-A- 1 399 883
- CN-A- 1 672 514
- CN-A- 1 672 514
- US-A- 4 927 823
- US-A- 6 127 411
- US-A1- 2005 049 145
- LAMONDIA ET AL: "Efficacy of fungicides and a systemic acquired resistance activator (acibenzolar-S-methyl) against tobacco blue mould", CROP PROTECTION, ELSEVIER SCIENCE, GB, vol. 28, no. 1, 1 January 2009 (2009-01-01), pages 72-76, XP025714756, ISSN: 0261-2194, DOI: 10.1016/J.CROPRO.2008.08.017 [retrieved on 2008-10-10]
- Anonymous: "Propamocarb (Pesticide residues in food: 1984 evaluations)", IPCS INCHEM, 1 January 1984 (1984-01-01), XP055206813, Retrieved from the Internet: URL:http://www.inchem.org/documents/jmpr/j mpmono/v84pr39.htm [retrieved on 2015-08-07]
- Jeffrey M Stein ET AL: "Field optimization of dimethomorph for the control of potato late blight Phytophthora infestans: application rate, interval, and mixtures", Crop Protection, vol. 22, no. 4, 1 May 2003 (2003-05-01), pages 609-614, XP055206816, ISSN: 0261-2194, DOI: 10.1016/S0261-2194(02)00243-0

## Description

The present invention relates to a method for reducing or preventing damage caused by pesticides to plants treated therewith and/or to plant propagation material treated therewith and/or to plants growing from this plant propagation material and/or to plants which grow in a growth medium which has been or is treated therewith, which method comprises treating the plant propagation material and/or the plants and/or the growth medium with at least one of these pesticides in combination with dimethomorph. Moreover, the invention relates to the use of dimethomorph as safener for pesticides which have a phytotoxic effect on plants treated therewith, on plant propagation material treated therewith, on plants growing from plant propagation material which has been treated therewith and/or on plants which grow in a growth medium which has been or is treated therewith (i.e. the use for reducing or preventing damage caused by pesticides to plants treated therewith, to plant propagation material treated therewith, to plants growing from such plant propagation material and/or to plants which grow in a growth medium which has been or is treated therewith). Furthermore, the invention relates to compositions which comprise dimethomorph and specific fungicides and/or specific insecticides and to the use of a composition comprising dimethomorph and said specific fungicides for controlling harmful fungi. Finally, the invention relates to plant propagation material which has been treated with a composition according to the invention.

It is known that some plant protectants may have a phytotoxic effect on crop plants treated therewith. For instance, F. Montfort et al., Pesticide Science 46(4), 1996, 315-322, report that the use of azole fungicides, such as triticonazole, for the treatment of seed and crop plants may have an adverse effect on plant growth. For example, a greatly reduced longitudinal growth is observed when wheat is treated with fluquin-conazole or triticonazole.

Experiments carried out by the applicant have demonstrated that other phytotoxic effects, too, occur in plants which have been treated with certain pesticides, for example reduced or delayed germination or diminished emergence. These negative effects are particularly pronounced if the propagation material or the young plants are exposed to abiotic stress, such as cold temperatures and/or extremely wet conditions, especially during germination and emergence. The phytotoxic effects are also particularly pronounced if the propagation material is "overstored", i.e. is stored for a longer time than the minimum durability or even for a longer time than one season (i.e., depending on the plant species, 6, 12 or 18 months) and especially if the propagation material is transgenic.

These disadvantageous effects, which are accompanied by yield losses and which, to some extent, ruin the pesticidal activity of these compounds, limit the economical benefit of using the pesticides.

It is therefore an object of the present invention to provide a compound which reduces or prevents the negative effects of phytotoxically active pesticides.

Surprisingly, it has been found that dimethomorph prevents, or at least reduces, the phytotoxic effects of such pesticides.

Thus, the object was achieved by a method for reducing or preventing damage caused by pesticides A to plants treated therewith and/or to plant propagation material treated therewith and/or to plants growing from this plant propagation material and/or to plants which grow in a growth medium which has been or is treated therewith, which method comprises treating the plant propagation material and/or the plants and/or the growth medium with
(a) at least one pesticide A in combination with
(b) dimethomorph.

This means that the plant propagation material and/or the plants and/or the growth medium are treated with the at least one pesticide A in combination with dimethomorph instead of treating the plant propagation material and/or the plants and/or the growth medium with the at least one pesticide A alone.

The invention also relates to the use of dimethomorph as safener for pesticides A which have a phytotoxic effect on plants treated therewith, on plant propagation material treated therewith, on plants growing from plant propagation material which has been treated therewith and/or on plants which grow in a growth medium which has been or is treated therewith. In other words, the invention also relates to the use of dimethomorph for reducing or preventing damage caused by pesticides A to plants treated therewith, to plant propagation material treated therewith, to plants growing from this plant propagation material and/or to plants which grow in a growth medium which has been or is treated therewith.

Naturally, the pesticides A are different from dimethomorph.

In general, the term "safener" is used for substances which reduce or prevent the damage to crop plants as the result of herbicides which are employed for destroying weeds. For the purposes of the present invention, however, this term is defined in more general terms and refers to substances which reduce or prevent the phytotoxic effect of crop protectants on plants treated therewith and/or on plants whose propagation material and/or growth medium have been treated or are treated therewith. Thus, the subject matter of the present invention relates to the use of dimethomorph for reducing or preventing the phytotoxic effect(s) of pesticides on plants which, and/or whose propagation material, and/or whose growth medium have been treated, or are treated, with these pesticides.

Naturally, the term "whose propagation material" relates to the propagation material from which the plant is to grow or has been grown and not the propagation material which it produces itself.

The term "propagation material" represents all types of plant propagation material from which a complete plant can be grown, such as seeds, grains, fruits, tubers, the rhizome, spores, cuttings, slips, meristem tissue, individual plant cells and any form of plant tissue from which a complete plant can be grown. Preferably, it takes the form of seeds.

"Growth medium" or "growth substrate" refers to any type of substrate in which the plant grows or will grow, such as soil (for example in a pot, in borders or in the field) or artificial media. As a rule, it takes the form of the soil.

The term "damage" is used in the present invention essentially as a synonym for phytotoxic effect.

The "combined" use of dimethomorph and the at least one pesticide A or the treatment according to the invention with the at least one pesticide A "in combination with" dimethomorph on the one hand can be understood as using a physical mixture of dimethomorph and the at least one pesticide A. On the other hand, the combined use may also consist in using dimethomorph and the at least one pesticide A separately, but within a sufficiently short time of one another so that the desired effect can take place. More detailed illustrations of the combined use can be found in the specifications below.

The remarks made below as to suitable or preferred embodiments of the invention, for example as to suitable and preferred pesticides A, to specific phytotoxic effects ("damages"), etc. can be taken alone or, preferably, in every possible combination with each other.

The remarks as to suitable or preferred embodiments of the invention, for example to suitable and preferred pesticides, to specific phytotoxic effects, to suitable and preferred plants which or whose propagation material or whose growth medium is to be treated, etc. apply to all methods, uses and compositions according to the invention, as far as they overlap and as far as not specified otherwise.

The use according to the invention of dimethomorph as a safener reduces or prevents the phytotoxic effect which certain pesticides exert on the plants or propagation material treated therewith or on plants which are grown from propagation material treated therewith or which grow in a growth medium treated therewith.

"Treatment of the plants" means that the plant, or, to be more precise, aerial plant parts, is treated during the life of the plant, i.e. between emergence and dying down or harvesting, preferably during the vegetative phase, i.e. from emergence until before anthesis.

The phytotoxic effect which these pesticides have can manifest itself in various ways and can be recognized by comparing plants which and/or whose propagation material and/or whose growth medium have been treated with a phytotoxically active pesticide and plants which, whose propagation material and whose growth medium have not been treated with this pesticide. Naturally, the comparison must be carried out under pathogen-free conditions since otherwise the untreated plants might, as the result of infection, display symptoms which correspond to the phytotoxic effects or are similar thereto.

The phytotoxic effect can manifest itself for example in that propagation material which has been treated with the pesticide in question and/or which is sown in a pesticide-treated growth medium germinates more poorly. Poorer germination means that the same amount of propagation material (for example the same number of seeds) gives rise to fewer seedlings in comparison with propagation material which has not been treated with the pesticide in question and which grows in a correspondingly untreated growth medium.

Alternatively, or additionally, the phytotoxic effect may manifest itself in reduced emergence. "Emergence" is understood as meaning that the seedling appears from the soil. Reduced emergence means that fewer seedlings appear from the soil from the same amount of propagation material (for example from the same number of seeds) in comparison with propagation material which has not been treated with the pesticide in question and which germinates and grows in a growth medium which has not been treated correspondingly.

In some plant species, germination and emergence may coincide, i.e. the first cotyledon already appears from the soil. However, since this is not the case with all plants, germination and emergence are described separately.

Alternatively or in addition, the phytotoxic effect can manifest itself in reduced growth of the hypocotyl or stunting of plants, i.e. the stalk does not grow as long as expected, and, possibly, leaves and apex lie on the ground. In some plants, such as cereals, this characteristic is not necessarily disadvantageous since it reduces or prevents lodging; in some plant species, however, it is entirely undesirable.

Alternatively or in addition, the phytotoxic effect of the pesticide(s) A may manifest itself in an increased connation and/or adnation. Connation and adnation mean that parts of the plant grow together and fuse. Connation is the fusion of similar organs - for example, the fused petals in the morning glory, while adnation denotes the fusion of different organs - for example, the stamens fused to petals in the mint family (Lamiaceae). Connation/adnation might cause the fiber orientation to bend, which in turn enhances the risk of cracking. Increased connation/adnation means that more intergrowing parts in a plant appear and/or more plants show connation/adnation in comparison with plants which and whose propagation material and whose growth medium have not been treated with the pesticide in question.

Alternatively or in addition, the phytotoxic effect of the fungicide may manifest itself in an increased yellowing of the plant. Increased yellowing means decreased chlorophyll content and thus a diminished photosynthesis rate. Increased yellowing means that the leaves' green coloration is less intense (determined over the whole leaves' surface) or that the leaves have a larger yellow-coloured surface in comparison with plants which and whose propagation material and whose growth medium have not been treated with the pesticide in question.

Generally said, the phytotoxic effect of the fungicide may manifest itself in diminished vitality of the plants (including their propagation material). Diminished vitality can be ascertained by comparison with plants which, whose propagation material and whose growth medium have not been treated with the phytotoxic pesticide in question. The vitality of a plant manifests itself in a variety of factors. Examples of factors which are manifestations of the plant's vitality are:
(a) overall visual appearance;
(b) root growth and/or root development;
(c) size of the leaf area;
(d) intensity of the leaves' green coloration;
(e) number of dead leaves in the vicinity of the ground;
(f) plant height;
(g) plant weight;
(h) growth rate;
(i) appearance and/or number of fruits;
(j) plant stand density;
(k) germination behavior;
(l) emergence behavior;
(m) shoot number;
(n) shoot type (quality and productivity)
(o) toughness of the plant, for example resistance to biotic or abiotic stress;
(p) presence of necroses;
(q) senescence behavior;
(r) connation and/or adnation.

Accordingly, the phytotoxic effect can manifest itself in a worsening of at least one of the abovementioned factors, for example in
(a) a poorer overall visual appearance;
(b) poorer root growth and/or poorer root development;
(c) reduced size of the leaf area;
(d) less intense green coloration of the leaves / more yellowing (see hereinabove);
(e) more dead leaves in the vicinity of the ground;
(f) lower plant height;
(g) lower plant weight;
(h) poorer growth rate;
(i) poorer appearance and/or lower number of fruits;
(j) lower plant stand density;
(k) poorer germination behavior (see hereinabove);
(l) poorer emergence behavior (see hereinabove);
(m) fewer shoots;
(n) shoots in lower quality (for example weak shoots), less productive shoots
(o) reduced toughness of the plant, for example reduced resistance to biotic or abiotic stress;
(p) presence of necroses;
(q) a poorer senescence behavior (earlier senescence)
(r) more connation and/or adnation (see hereinabove).

Biotic stress is caused by organisms, for example by pests (such as insects, arachnids, nematodes and the like), competing plants (for example weeds), phytopathogenic fungi and other microorganisms such as bacteria and viruses. Abiotic stress is triggered for example by extreme temperatures such as heat, chill, great variations in temperature, or unseasonal temperatures, drought, extreme wetness, high salinity, radiation (for example increased UV radiation as the result of the diminishing ozone layer), increased amount of ozone in the vicinity of the soil and/or organic and inorganic pollution (for example as the result of phytotoxic amounts of pesticides or contamination with heavy metals). Biotic and abiotic stress leads to a reduced quantity and/or quality of the stressed plant and its fruits. Thus, for example, the synthesis and addition of proteins is mainly adversely affected by temperature stress, while growth and polysaccharide synthesis are reduced by virtually all stress factors. This leads to biomass losses and to a reduced nutrient content of the plant product.

It is clear that the appearance of the individual symptoms of the phytotoxic effect depends on whether the plant itself (or aerial parts thereof), its propagation material or its growth medium have been treated with the pesticide. Thus, poorer germination behavior will naturally only be observed when the propagation material and/or the growth substrate have been treated before or shortly after sowing/planting. The same applies to the emergence behavior. Reduced plant vitality (e.g. in the form of a deterioration of at least one of the features (a) to (j) and (m) to (r)), however, can also be observed when the plant or parts thereof have been treated during the life of the plant (i.e. between emergence and harvest or dying down) or when the growth substrate has been treated significantly later after sowing/planting.

However, the phytotoxic effects can be observed mainly when the propagation material from which the plant has been grown and/or the plant's growth medium have been treated with the pesticides in question - especially before emergence of the plant - and in particular when the propagation material has been treated with the pesticide in question.

In a preferred embodiment, the invention relates to a method for reducing or preventing damage caused by pesticides A to plant propagation material which has been treated therewith and/or to plants growing from this plant propagation material and/or to plants which grow in a growth medium which has been or is treated therewith and more preferably to plants growing from plant propagation material which has been treated therewith comprising treating the plant propagation material and/or the plants and/or the growth medium with
(a) at least one pesticide A in combination with
(b) dimethomorph.

In another preferred embodiment, the invention relates to the use of dimethomorph for reducing or preventing damage caused by pesticides A to plant propagation material which has been treated therewith and/or to plants growing from this plant propagation material and/or to plants which grow in a growth medium which has been or is treated therewith and more preferably to plants growing from plant propagation material which has been treated therewith.

It has been observed that pesticides A cause damage to young plants growing from propagation material which has been treated therewith especially if the propagation material is exposed to abiotic stress after sowing/planting and/or if the young plants are exposed to abiotic stress. To be more precise, it has been observed that pesticides A cause damage to young plants growing from propagation material which has been treated therewith especially if the plants are under abiotic stress while being in the growth stage 01 to 32, preferably 05 to 29, more preferably 09 to 29 and in particular 09 to 19 according to BBCH extended scale (see www.bba.de/veroeff/bbch/bbcheng.pdf).

Thus, in a more preferred embodiment, the invention relates to a method for reducing or preventing damage caused by pesticides A to plants growing from plant propagation material which has been treated therewith, where the plants are under abiotic stress while being in the growth stage 01 to 32, preferably 05 to 29, more preferably 09 to 29 and in particular 09 to 19 according to BBCH extended scale (see www.bba.de/veroeff/bbch/bbcheng.pdf), which method comprises treating the plant propagation material with
(a) at least one pesticide A in combination with
(b) dimethomorph.

In another more preferred embodiment, the invention relates to the use of dimethomorph for reducing or preventing damage caused by pesticides A to plants growing from plant propagation material which has been treated therewith, where the plants are under abiotic stress while being in the growth stage 01 to 32, preferably 05 to 29, more preferably 09 to 29 and specifically 09 to 19 according to BBCH extended scale.

Abiotic stress preferably means that the plants are exposed to cold temperatures, preferably to a temperature of below 10°C, more preferably of maximum 5 °C, in particular of maximum 0 °C, and/or to extreme wetness, for example to 20 mm/24 h rainfall and more during at least 3 days, preferably to 50 mm/24 h rainfall and more during at least 5 days while the plants are in the given growth stages. More preferably, abiotic stress preferably means that the plants are exposed to cold temperatures, preferably to a temperature of below 10°C, more preferably of maximum 5 °C, in particular of maximum 0 °C.

It has furthermore been observed that pesticides A cause damage to propagation material which has been treated therewith or to plants growing from propagation material which has been treated therewith especially if the propagation material is overstored. "Overstored" means that the propagation material has been stored for a longer time than the minimum durability or even for a longer time than one season (which is, depending on the plant species, 6 or 12 months). The minimum durability depends on the plant species and is generally known by those skilled in the art.

Thus, in an alternative, more preferred embodiment, the invention relates to a method for reducing or preventing damage caused by pesticides A to plant propagation material which has been treated therewith and/or to plants growing therefrom, and where the plant propagation material, after the treatment, has been overstored, i.e. depending on the plant species stored for more than 6 months or for more than 12 months, specifically for more than 18 months, which method comprises treating the plant propagation material with
(a) at least one pesticide A in combination with
(b) dimethomorph.

As a matter of course, treating the plant propagation material with the at least one pesticide A in combination with dimethomorph refers to treating it with this combination instead of pesticide A alone and of course before storage.

In another more preferred embodiment, the invention relates to the use of dimethomorph for reducing or preventing damage caused by pesticides A to plant propagation material which has been treated therewith and/or to plants growing therefrom, and where the plant propagation material, after the treatment, has been overstored, i.e. stored for more than 6 months or for more than 12 months, specifically for more than 18 months.

As a matter of course, the use of dimethomorph means treating the plant propagation material with the at least one pesticide A in combination with dimethomorph instead of pesticide A alone and of course before storage.

"Reducing or preventing damage" to the plant propagation material and/or to the plant preferably means that germination and/or emergence is improved and/or dwarfing and/or yellowing is reduced as compared to propagation material treated with pesticides A alone or plants treated with pesticides A alone and/or growing from propagation material which has been treated with pesticides A alone and/or growing in a growth medium which has been or is treated with pesticides A alone.

Thus, in an even more preferred embodiment, the invention relates to a method for improving the vitality, especially the germination and/or the emergence, of the plants and/or reducing dwarfing and/or yellowing of the plants.

In another even more preferred embodiment, the invention relates to the use of dimethomorph for improving the vitality, especially the germination and/or the emergence and/or reducing dwarfing and/or yellowing, of plants which, whose propagation material (seeds) and/or growth medium have been treated, or are treated, with at least one pesticide A.

In particular, the invention relates to a method for improving the germination of plants whose propagation material (seeds) and/or growth medium have been treated, or are treated, preferably whose propagation material (seeds), has been treated with at least one pesticide A, comprising treating the propagation material (seeds) and/or growth medium, preferably the propagation material, with said at least one pesticide A in combination with dimethomorph. Very particularly, the invention relates to a method for improving the germination of plants whose propagation material (seeds) have been treated with at least one pesticide A, comprising treating the propagation material (seeds) with said at least one pesticide A in combination with dimethomorph.

In particular, the invention relates to the use of dimethomorph for improving the germination of plants whose propagation material (seeds) and/or growth medium have been treated, or are treated, with at least one pesticide A. Very particularly, the invention relates to the use of dimethomorph for improving the germination of plants whose propagation material (seeds) have been treated with at least one pesticide A.

In particular, the invention also relates to a method for improving the emergence of plants which, whose propagation material (seeds) and/or growth medium have been treated, or are treated, with at least one pesticide A, comprising treating the plants, the propagation material (seeds) and/or growth medium with said at least one pesticide A in combination with dimethomorph. Very particularly, the invention also relates to a method for improving the emergence of plants whose propagation material (seeds) have been treated with at least one pesticide A, comprising treating the propagation material (seeds) with said at least one pesticide A in combination with dimethomorph.

In particular, the invention also relates to the use of dimethomorph for improving the emergence of plants which, whose propagation material (seeds) and/or growth medium have been treated, or are treated, with at least one pesticide A. Very particularly, the invention also relates to the use of dimethomorph for improving the emergence of plants whose propagation material (seeds) have been treated with at least one pesticide A.

Preferably, 1, 2, 3 or 4 pesticides A are used. More preferably, 1, 2 or 3 and in particular 1 or 2 pesticides A are used.

Preferably, the pesticide A is selected from the group consisting of (i) insecticides and (ii) fungicides.

The insecticides are preferably selected from
(i) abamectin, clothianidin, imidacloprid, thiamethoxam, acetamiprid, metaflumizone, fipronil, cyantraniliprole (HGW86, cyazapyr), chlorantraniliprole (rynaxypyr), alpha-cypermethrin, tefluthrin, beta-cefluthrin, fubendiamide, and spinosad.
   The fungicides are preferably selected from
(ii) metalaxyl, mefenoxam, pyrimethanil, epoxiconazole, fluquiconazole, flutriafol, hymexazole, imazalil, metconazole, prochloraz, tebuconazole, triticonazole, iprodion, metiram, thiram, boscalid, carbendazim, silthiofam, fludioxonil, azoxystrobin, kresoxim-methyl, orysastrobin, pyraclostrobin, trifloxystrobin, thiophanate methyl, ipconazole, prothioconazole, difenoconazole, triadimenol, triazoxide, fluoxastrobin, N-(3',4',5'-trifluorobiphenyl-2-yl)- 3-difluoromethyl-1-methyl-1 H-pyrazole-4-carboxamide (fluxapyroxade), N-[2-(4'-trifluoromethylthio)-biphenyl]-3-difluoromethyl-1-methyl-1 H-pyrazole-4-carboxamide, bixafen, N-[2-(1,3-dimethylbutyl)-phenyl]-1,3-dimethyl-5-fluoro-1 H-pyrazole-4-carboxamide, sedaxane, isopyrazam, penthiopyrad, thiabendazole, penflufen and fluopyram.
   Thus, the at least one pesticide A is preferably selected from abamectin, clothianidin, imidacloprid, thiamethoxam, acetamiprid, metaflumizone, fipronil, cyantraniliprole (HGW86, cyazapyr), chlorantraniliprole (rynaxypyr), alpha-cypermethrin, tefluthrin, beta-cefluthrin, fubendiamide, spinosad, metalaxyl, mefenoxam, pyrimethanil, epoxiconazole, fluquiconazole, flutriafol, hymexazole, imazalil, metconazole, prochloraz, tebuconazole, triticonazole, iprodion, metiram, thiram, boscalid, carbendazim, silthiofam, fludioxonil, azoxystrobin, kresoxim-methyl, orysastrobin, pyraclostrobin, trifloxystrobin, thiophanate methyl, ipconazole, prothiconazole, difenoconazole, triadimenol, triazoxide, fluoxastrobin, N-(3',4',5'-trifluorobiphenyl-2-yl)- 3-difluoromethyl-1-methyl-1 H-pyrazole-4-carboxamide (fluxapyroxade), N-[2-(4'-trifluoromethylthio)-biphenyl]-3-difluoromethyl-1-methyl-1H-pyrazole-4-carboxamide, bixafen, N-[2-(1,3-dimethylbutyl)-phenyl]-1,3-dimethyl-5-fluoro-1 H-pyrazole-4-carboxamide, sedaxane, isopyrazam, penthiopyrad, thiabendazole, penflufen, fluopyram and combinations thereof.
   Alternatively, the fungicides are preferably selected from
(ii) metalaxyl, mefenoxam, pyrimethanil, epoxiconazole, fluquiconazole, flutriafol, hymexazole, imazalil, metconazole, prochloraz, tebuconazole, triticonazole, iprodion, metiram, thiram, boscalid, carbendazim, silthiofam, fludioxonil, azoxystrobin, kresoxim-methyl, orysastrobin, pyraclostrobin, trifloxystrobin, thiophanate methyl, ipconazole, prothioconazole, difenoconazole, triadimenol, triazoxide, fluoxastrobin, N-(3',4',5'-trifluorobiphenyl-2-yl)- 3-difluoromethyl-1-methyl-1 H-pyrazole-4-carboxamide (fluxapyroxade), N-[2-(4'-trifluoromethylthio)-biphenyl]-3-difluoromethyl-1-methyl-1 H-pyrazole-4-carboxamide, bixafen, N-[2-(1,3-dimethylbutyl)-phenyl]-1,3-dimethyl-5-fluoro-1H-pyrazole-4-carboxamide, sedaxane, isopyrazam and penthiopyrad.

Thus, alternatively, the at least one pesticide A is preferably selected from abamectin, clothianidin, imidacloprid, thiamethoxam, acetamiprid, metaflumizone, fipronil, cyantraniliprole (HGW86, cyazapyr), chlorantraniliprole (rynaxypyr), alpha-cypermethrin, tefluthrin, beta-cefluthrin, fubendiamide, spinosad, metalaxyl, mefenoxam, pyrimethanil, epoxiconazole, fluquiconazole, flutriafol, hymexazole, imazalil, metconazole, prochloraz, tebuconazole, triticonazole, iprodion, metiram, thiram, boscalid, carbendazim, silthiofam, fludioxonil, azoxystrobin, kresoxim-methyl, orysastrobin, pyraclostrobin, trifloxystrobin, thiophanate methyl, ipconazole, prothiconazole, difenoconazole, triadimenol, triazoxide, fluoxastrobin, N-(3',4',5'-trifluorobiphenyl-2-yl)- 3-difluoromethyl-1-methyl-1 H-pyrazole-4-carboxamide (fluxapyroxade), N-[2-(4'-trifluoromethylthio)-biphenyl]-3-difluoromethyl-1-methyl-1H-pyrazole-4-carboxamide, bixafen, N-[2-(1,3-dimethylbutyl)-phenyl]-1,3-dimethyl-5-fluoro-1 H-pyrazole-4-carboxamide, sedaxane, isopyrazam, penthiopyrad and combinations thereof.

The insecticides are more preferably selected from
(i) abamectin, acetamiprid, clothianidin, imidacloprid, thiamethoxam, spinosad, metaflumizone, fipronil, chlorantraniliprole (rynaxypyr) and cyantraniliprole (HGW86, cyazapyr).
   The fungicides are more preferably selected from
(ii) metalaxyl, mefenoxam, epoxiconazole, fluquiconazole, prochloraz, triticonazole, iprodion, thiram, tebuconazole, boscalid, carbendazim, silthiofam, fludioxonil, azoxystrobin, orysastrobin, pyraclostrobin, trifloxystrobin, thiophante methyl, ipconazole, prothiocanazole, difenoconazole, N-(3',4',5'-trifluorobiphenyl-2-yl)- 3-difluoromethyl-1-methyl-1H-pyrazole-4-carboxamide, N-[2-(1,3-dimethylbutyl)-phenyl]-1,3-dimethyl-5-fluoro-1 H-pyrazole-4-carboxamide, sedaxane and penthiopyrad.

Thus, the at least one pesticide A is more preferably selected from abamectin, acetamiprid, clothianidin, imidacloprid, thiamethoxam, spinosad, metaflumizone, fipronil, chlorantraniliprole (rynaxypyr), cyantraniliprole (HGW86, cyazapyr), metalaxyl, mefenoxam, epoxiconazole, fluquiconazole, prochloraz, triticonazole, iprodion, thiram, tebuconazole, boscalid, carbendazim, silthiofam, fludioxonil, azoxystrobin, orysastrobin, pyraclostrobin, trifloxystrobin, thiophante methyl, ipconazole, prothiocanazole, difenoconazole, N-(3',4',5'-trifluorobiphenyl-2-yl)-3-difluoromethyl-1-methyl-1 H-pyrazole-4-carboxamide, N-[2-(1,3-dimethylbutyl)-phenyl]-1,3-dimethyl-5-fluoro-1H-pyrazole-4-carboxamide, sedaxane, penthiopyrad and combinations thereof.

The insecticides are even more preferably selected from
(i) abamectin, metaflumizone and fipronil.
   The fungicides are more preferably selected from
(ii) boscalid, metalaxyl, pyraclostrobin, orysastrobin, azoxystrobin, trifloxystrobin, N-(3',4',5'-trifluorobiphenyl-2-yl)-3-difluoromethyl-1-methyl-1H-pyrazole-4-carboxamide, N-[2-(1,3-dimethylbutyl)-phenyl]-1,3-dimethyl-5-fluoro-1H-pyrazole-4-carboxamide, sedaxane and penthiopyrad.

Thus, the at least one pesticide A is even more preferably selected from abamectin, metaflumizone, fipronil, boscalid, metalaxyl, pyraclostrobin, orysastrobin, azoxystrobin, trifloxystrobin, N-(3',4',5'-trifluorobiphenyl-2-yl)-3-difluoromethyl-1-methyl-1H-pyrazole-4-carboxamide, N-[2-(1,3-dimethylbutyl)-phenyl]-1,3-dimethyl-5-fluoro-1H-pyrazole-4-carboxamide, sedaxane, penthiopyrad and combinations thereof.

The insecticides are particularly preferably selected from
(i) abamectin, metaflumizone and fipronil.
   The fungicides are particularly preferably selected from
(ii) boscalid, metalaxyl, pyraclostrobin, orysastrobin, and N-(3',4',5'-trifluorobiphenyl-2-yl)-3-difluoromethyl-1-methyl-1H-pyrazole-4-carboxamide.

Thus, the at least one pesticide A is even more preferably selected from abamectin, metaflumizone, fipronil, boscalid, metalaxyl, pyraclostrobin, orysastrobin, N-(3',4',5'-trifluorobiphenyl-2-yl)-3-difluoromethyl-1-methyl-1H-pyrazole-4-carboxamide and combinations thereof.

In an alternative embodiment, the insecticides are particularly preferably selected from
(i) clothianidin, thiamethoxam and fipronil.
   In an alternative embodiment, the fungicides are particularly preferably selected from
(ii) metalaxyl, mefenoxam, triticonazole, azoxystrobin, pyraclostrobin, and thiophanate methyl.

Thus, in an alternative embodiment, the at least one pesticide A is even more preferably selected from clothianidin, thiamethoxam, fipronil, metalaxyl, mefenoxam, triticonazole, azoxystrobin, pyraclostrobin, thiophanate methyl and combinations thereof.

In a particular embodiment, the at least one pesticide A is pyraclostrobin, optionally in combination with 1, 2 or 3 of the following pesticides: abamectin, metaflumizone, fipronil, boscalid, metalaxyl, orysastrobin, N-(3',4',5'-trifluorobiphenyl-2-yl)-3-difluoromethyl-1-methyl-1H-pyrazole-4-carboxamide.

In an alternative particular embodiment, the at least one pesticide A is orysastrobin, optionally in combination with 1, 2 or 3 of the following pesticides: abamectin, metaflumizone, fipronil, boscalid, metalaxyl, pyraclostrobin, N-(3',4',5'-trifluorobiphenyl-2-yl)-3-difluoromethyl-1-methyl-1 H-pyrazole-4-carboxamide.

In an alternative particular embodiment, the at least one pesticide A is N-(3',4',5'-trifluorobiphenyl-2-yl)-3-difluoromethyl-1-methyl-1H-pyrazole-4-carboxamide, optionally in combination with 1, 2 or 3 of the following pesticides: abamectin, metaflumizone, fipronil, boscalid, metalaxyl, pyraclostrobin, orysastrobin.

Specifically, the at least one pesticide A is pyraclostrobin, optionally in combination with boscalid, and more specifically is pyraclostrobin in combination with boscalid. Even more specifically, the at least one pesticide A is pyraclostrobin.

Preferably, the at least one pesticide A and dimethomorph are used in a total weight ratio of from 500:1 to 1:500, more preferably from 200:1 to 1:200, even more preferably from 50:1 to 1:50, especially preferably from 20:1 to 1:20 and in particular from 10:1 to 1:10, e.g. 5:1 to 1:5 or 2:1 to 1:2. Specifically, the at least one pesticide A and dimethomorph are used in a total weight ratio of from 1:1 to 1:10 and more specifically from 1:1,5 to 1:5.

In principle, the plants can take the form of all plant species and plant varieties which are usually treated with the above-described fungicides and where a phytotoxic effect is observed as the result of this treatment. As a rule, these plants are agriculturally useful plants or else ornamentals. Agriculturally useful plants are crop plants where parts or the entire plant act as a raw material for foodstuffs, feeding stuffs, fibers (for example cotton, linen), fuels (for example timber, bioethanol, biodiesel, biomass) or other chemical compounds.

Agriculturally useful plants are generally cultivated plants. The term "cultivated plants" is to be understood as including plants which have been modified by breeding, mutagenesis or genetic engineering including but not limiting to agricultural biotech products on the market or in development (cf. http://www.bio.org/speeches/pubs/er/agri_products.asp).

Examples are cereals, e. g. maize (corn), wheat, triticale, rye, barley, oats, millet/sorghum or rice; beet, e. g. sugar beet or fodder beet; fruits, such as pome fruit, stone fruit or soft fruit, e. g. apple, pear, plum, peach, almond, cherry, strawberry, raspberry, blackberry, blueberry or gooseberry; citrus fruit, such as orange, lemon, grapefruit or mandarin; leguminous plants, such as lentil, vegetable pea, fodder pea, bean, alfalfa or soybeans; oil plants, such as oilseed rape, mustard, olives, sunflower, coconut, cocoa beans, castor oil plants, oil palms, ground nuts or soybeans; cucurbits, such as pumpkin/squash, cucumber, melon or watermelon; fiber plants, such as cotton, flax, hemp or jute; vegetables, such as spinach, kale, cabbage, Chinese cabbage, lettuce, endive, asparagus, carrot, celeriac, kohlrabi, chicory, radish, swede, scorzonerea, Brussels sprout, cauliflower and broccoli, onion, leek, garlic, shallot, tomato, potato, cucurbit, paprika or sweet pepper; lauraceous plants, such as avocados, cinnamon or camphor; energy and raw material plants, such as corn, soybean, rape, sugar cane or oil palm; tobacco; nuts; coffee; tea; banana; vine (table grape and grape juice grape vine); mango; pawpaw; hop; turf/grass; clover; elephant grass (Miscanthus); natural rubber plants or ornamental and forestry plants, such as flowers, shrubs, broad-leaved trees or evergreens, e. g. conifers,.

Preferred agriculturally useful plants are selected from among maize (corn), wheat, triticale, rye, barley, oats, millet/sorghum, rice, sugar beet, fodder beet, lentil, vegetable pea, fodder pea, bean, alfalfa (lucerne), soybeans, oilseed rape, mustard, sunflower, groundnut (peanut), cucurbit, pumpkin/squash, cucumber, melon, watermelon, cotton, flax, hemp, jute, spinach, kale, cabbage, Chinese cabbage, lettuce, endive, asparagus, carrot, celeriac, kohlrabi, chicory, radish, swede, scorzonerea, Brussels sprout, cauliflower, broccoli, onion, leek, garlic, shallot, tomato, potato, paprika, sweet pepper, sugar cane, tobacco, turf/grass, clover, elephant grass (Miscanthus), natural rubber plants, ornamental and forestry plants.

More preferred agriculturally useful plants are selected from among soybean, maize, wheat, triticale, oats, rye, barley, oilseed rape, millet/sorghum, rice, sunflower, cotton and sugar cane, more preferably among soybean, maize, sunflower, sugar beet and oilseed rape.

Alternatively, preferred agriculturally useful plants are selected among vegetables, which in turn are preferably selected from bulb vegetables, for example onion, leek, garlic and shallot, root and stem vegetables, for example carrot, celeriac, kohlrabi, chicory, radish, swede and scorzonerea, leaf vegetables forming heads, such as cabbage, Chinese cabbage, lettuce and endive, leaf vegetables not forming heads, such as spinach and kale, other brassica vegetables, such as Brussels sprout, cauliflower and broccoli, further potato, tomato, paprika, sweet pepper, cucumber, pumpkin/squash, melon, watermelon, bean, vegetable pea and fodder pea , and more preferably among tomato, onion, lettuce and pea.

Examples of ornamentals are turf, geranium, pelargonium, petunia, begonia and fuchsia, to mention only a few examples of a large number of ornamentals.

More preferably, the plants are selected from soybean, maize, sugar beet, oilseed rape and sunflower. Specifically, the plant is sugar beet.

The plants can be non-transgenic or transgenic in nature.

Genetically modified plants or transgenic plants are plants whose genetic material has been modified by the use of recombinant DNA techniques so that under natural circumstances they cannot readily be obtained by cross breeding, mutations or natural recombination. Typically, one or more genes have been integrated into the genetic material of a genetically modified plant in order to improve certain properties of the plant. Such genetic modifications also include, but are not limited to, targeted post-transtional modification of protein(s), oligo- or polypeptides e. g. by glycosylation or polymer additions such as prenylated, acetylated or farnesylated moieties or PEG moieties.

Plants that have been modified by breeding, mutagenesis or genetic engineering for example have been rendered tolerant to applications of specific classes of herbicides, such as hydroxyphenylpyruvate dioxygenase (HPPD) inhibitors; acetolactate synthase (ALS) inhibitors, such as sulfonyl ureas (see e. g. US 6,222,100, WO 01/82685, WO 00/26390, WO 97/41218, WO 98/02526, WO 98/02527, WO 04/106529, WO 05/20673, WO 03/14357, WO 03/13225, WO 03/14356, WO 04/16073) or imidazolinones (see e. g. US 6,222,100, WO 01/82685, WO 00/026390, WO 97/41218, WO 98/002526, WO 98/02527, WO 04/106529, WO 05/20673, WO 03/014357, WO 03/13225, WO 03/14356, WO 04/16073); enolpyruvylshikimate-3-phosphate synthase (EPSPS) inhibitors, such as glyphosate (see e. g. WO 92/00377); glutamine synthetase (GS) inhibitors, such as glufosinate (see e.g. EP-A 242 236, EP-A 242 246) or oxynil herbicides (see e. g. US 5,559,024) as a result of conventional methods of breeding or genetic engineering. Several cultivated plants have been rendered tolerant to herbicides by conventional methods of breeding (mutagenesis), e. g. Clearfield^{®} summer rape (Canola, BASF SE, Germany) being tolerant to imidazolinones, e. g. imazamox. Genetic engineering methods have been used to render cultivated plants such as soybean, cotton, corn, beets and rape tolerant to herbicides such as glyphosate and glufosinate, some of which are commercially available under the trade names RoundupReady^{®} (glyphosate-tolerant, Monsanto, U.S.A.) and LibertyLink^{®} (glufosinate-tolerant, Bayer CropScience, Germany).

Suitable plants for the purpose of the present invention are also plants which, by the use of recombinant DNA techniques, are capable to synthesize one or more insecticidal proteins, especially those known from the bacterial genus *Bacillus,* particularly from *Bacillus* thuringiensis, such as δ-endotoxins, e. g. CryIA(b), CryIA(c), CryIF, CryIF(a2), CryIIA(b), CryIIIA, CryIIIB(b1) or Cry9c; vegetative insecticidal proteins (VIP), e. g. VIP1, VIP2, VIP3 or VIP3A; insecticidal proteins of bacteria colonizing nematodes, e. g. Photorhabdus spp. or *Xenorhabdus* spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard^{®} (corn cultivars producing the Cry1Ab toxin), YieldGard^{®} Plus (corn cultivars producing Cry1Ab and Cry3Bb1 toxins), Starlink^{®} (corn cultivars producing the Cry9c toxin), Herculex^{®} RW (corn cultivars producing Cry34Ab1, Cry35Ab1 and the enzyme Phosphinothricin-N-Acetyltransferase [PAT]); NuCOTN^{®} 33B (cotton cultivars producing the Cry1Ac toxin), Bollgard^{®} I (cotton cultivars producing the Cry1Ac toxin), Bollgard^{®} II (cotton cultivars producing Cry1Ac and Cry2Ab2 toxins); VIPCOT^{®} (cotton cultivars producing a VIP-toxin); NewLeaf^{®} (potato cultivars producing the Cry3A toxin); Bt-Xtra^{®}, NatureGard^{®}, KnockOut^{®}, BiteGard^{®}, Protecta^{®}, Bt11 (e. g. Agrisure^{®} CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1F toxin and PAT enzyme).

Suitable plants for the purpose of the present invention are also plants which, by the use of recombinant DNA techniques, are capable to synthesize one or more proteins to increase the resistance or tolerance of those plants to bacterial, viral or fungal pathogens. Examples of such proteins are the so-called "pathogenesis-related proteins" (PR proteins, see, e. g. EP-A 392 225), plant disease resistance genes (e. g. potato cultivars, which express resistance genes acting against *Phytophthora infestans* derived from the mexican wild potato *Solanum bulbocastanum)* or T4-lysozym (e. g. potato cultivars capable of synthesizing these proteins with increased resistance against bacteria such as *Erwinia amylvora).* The methods for producing such genetically modified plants are generally known to the person skilled in the art and are described, e. g. in the publications mentioned above.

Furthermore, suitable plants for the purpose of the present invention are plants which, by the use of recombinant DNA techniques, are capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.

Suitable plants for the purpose of the present invention are moreover plants which, by the use of recombinant DNA techniques, contain a modified amount of substances of content or new substances of content, specifically to improve human or animal nutrition, e. g. oil crops that produce health-promoting long-chain omega-3 fatty acids or unsaturated omega-9 fatty acids (e. g. Nexera^{®} rape, DOW Agro Sciences, Canada).

Furthermore, suitable plants for the purpose of the present invention are plants which, by the use of recombinant DNA techniques, contain a modified amount of substances of content or new substances of content, specifically to improve raw material production, e. g. potatoes that produce increased amounts of amylopectin (e. g. Amflora^{®} potato, BASF SE, Germany).

It is to be understood that when the plant is a transgenic plant, the transgenic events that are present in the plant can include any transgenic event. In fact, the use of "stacked" transgenic events in a plant is also encompassed.

It has been observed that the above-mentioned phytotoxic effects are often more severe in plants having a transgenic event and especially having more than one transgenic event (gene-stacking). Thus, in one preferred embodiment, the plants are transgenic and especially have more than one transgenic event. Preferably, the transgenic events are selected from those which provide resistance to glyphosate and/or glufosinate, those which make the plant capable of producing various Bacillus thuringensis toxins, those which enhance plants' resistance to biotic and/or abiotic stress, those which enhance the plants' productivity and combinations thereof.

As regards the manner and the amount in which the pesticides A and dimethomorph are employed, reference is made to what is said hereinabove or hereinbelow in connection with the method according to the invention.

The treatment of the plants, its propagation material and/or its growth substrate can be accomplished for example in such a way that the plant, a part thereof, its propagation material and/or its growth substrate is treated with a mixture of the at least one pesticide and dimethomorph. Alternatively, the plant, its propagation material and/or its growth substrate can be treated with the at least one pesticide and dimethomorph in separate form, it being possible for the treatment with the individual active substances to be accomplished simultaneously or in succession. In the case of successive treatment, the time interval between the treatments must be such that the desired effect can take place. The time interval may be from a few seconds up to several months, for example up to 6 months. It has to be mentioned that the time interval of more than 10 days and up to several months applies only to seed treatment where the seeds can be subjected, after having been stored for some months, e.g. for up to 6 months, to a posttreatment. Preferably, the time interval is from a few seconds up to several days, for example up to 6, 8 or 10 days. Preferably, the interval between the treatments is relatively short, i.e. the at least one pesticide A and dimethomorph are applied within a time interval of from a few seconds up to at most 3 days and in particular up to not more than one day, specifically up to not more than one hour. In principle, it is possible to apply the different active substances to different subjects (subjects being, in the present context, plant, propagation material and growth substrate), that is, for example, to treat the seed with one of the active substances, for example with a pesticide A, and to apply the other active substance(s), namely dimethomorph and, if appropriate, another pesticide A, to the plant which develops from the seed and/or to treat their growth substrate therewith. However, it is preferred to apply all active substances employed to the same subject. In the case of the successive treatment, the sequence in which the individual active substances are applied is, as a rule, not critical. Frequently, however, the at least one pesticide is applied first, followed by dimethomorph.

It is especially preferred to treat the propagation material, specifically the seed, and/or the growth substrate, and in particular the seed. Here, the seed may be treated before sowing or else via the growth substrate into which it is sown, for example during sowing in the form of what is known as the in-furrow application. In this form of application, the active ingredients are placed into the furrow essentially at the same time as the seed.

The ratio of the total weight of pesticide(s) A employed according to the invention to the weight of dimethomorph employed in accordance with the invention is preferably 500:1 to 1:500, more preferably 200:1 to 1:200, even more preferably 50:1 to 1:50 , especially preferably from 20:1 to 1:20 and in particular 10:1 to 1:10, e.g. 5:1 to 1:5 or 2:1 to 1:2. Specifically, the at least one pesticide A and dimethomorph are used in a total weight ratio of from 1:1 to 1:10 and more specifically from 1:1,5 to 1:5.

The active substances (i.e. the at least one pesticide A and dimethomorph) can be formulated, in the ready-to-use preparations, in suspended, emulsified or dissolved form, either jointly or separately. The use forms depend entirely on the intended purposes.

The active substances can be employed as such, in the form of their formulations or the use forms prepared therefrom, for example in the form of directly sprayable solutions, powders, suspensions or dispersions, also highly concentrated aqueous, oily or other suspensions or dispersions, emulsions, oil dispersions, pastes, dusts, tracking powders or granules. The application is usually accomplished by spraying, misting, atomizing, scattering or pouring. The use forms and use methods depend on the intended purposes; in any case, they should ensure the finest possible distribution of the active substances.

Depending on the presentation in which the ready-to-use preparations of the active substances are present, they comprise one or more liquid or solid carriers, optionally surface-active substances and optionally further adjuvants which are conventionally used for the formulation of plant protectants. The compositions for such formulations are well known to the skilled worker.

Aqueous use forms can be prepared for example starting from emulsion concentrates, suspensions, pastes, wettable powders or water-dispersible granules by adding water. To prepare emulsions, pastes or oil dispersions, the active substances, as such or dissolved in an oil or solvent, can be homogenized in water by means of wetter, adhesive, dispersant or emulsifier. However, it is also possible to prepare concentrates consisting of active substance, wetter, adhesive, dispersant or emulsifier and, if appropriate, solvent or oil, and such concentrates are suitable for dilution with water.

The concentrations of the active substances in the ready-to-use preparations can be varied within substantial ranges. In general, they are between 0.0001 and 10%, preferably between 0.01 and 1 % (% by weight total active substance content based on the total weight of the ready-to-use preparation).

The active substances can also be employed successfully in the ultra-low-volume method (ULV), it being possible to apply formulations with more than 95% by weight of active substance, or indeed the active substances without additives.

It is possible to add, to the active substances, oils of various types, wetters, adjuvants, herbicides, fungicides and insecticides which are other than the active substances employed in accordance with the invention, nematicides, other pesticides such as bactericides, fertilizers and/or growth regulators, if appropriate only just before use (tank mix). These can be admixed to the active substances employed in accordance with the invention in a weight ratio of 1:100 to 100:1, preferably 1:10 to 10:1.

Adjuvants within this meaning are, in particular, organic modified polysiloxanes, for example Break Thru S 240^{®}; alcohol alkoxylates, for example Atplus 245^{®}, Atplus MBA 1303^{®}, Plurafac LF 300^{®} and Lutensol ON 30^{®}; EO/PO block polymers, for example Pluronic RPE 2035^{®} and Genapol B^{®}; alcohol ethoxylates, for example Lutensol XP 80^{®}; and sodium dioctyl sulfosuccinate, for example Leophen RA^{®}.

When using the active substances employed in accordance with the invention jointly with other fungicides, a widening of the fungicidal spectrum of activity results in many cases.

In a specific embodiment of the invention, no further fungicides or insecticides are employed in addition to the fungicides and insecticides employed in accordance with the invention.

The formulations are prepared in a known manner, e.g. by extending the active substance(s) with solvents and/or carriers, if desired using surface-active substances, i.e. emulsifiers and dispersants. Solvents/auxiliaries which are suitable are essentially:
- water, aromatic solvents (for example Solvesso products, xylene), paraffins (for example mineral fractions), alcohols (for example methanol, butanol, pentanol, benzyl alcohol), ketones (for example cyclohexanone, methyl hydroxybutyl ketone, diacetone alcohol, mesityl oxide, isophorone), lactones (for example gamma-butyrolacton), pyrrolidones (pyrrolidone, N-methylpyrrolidone, N-ethylpyrrolidone, n-octylpyrrolidone), acetates (glycol diacetate), glycols, fatty acid dimethylamides, fatty acids and fatty acid esters. In principle, solvent mixtures may also be used.
- carriers such as ground natural minerals (e.g. kaolins, clays, talc, chalk) and ground synthetic minerals (e.g. highly disperse silica, silicates); emulsifiers such as nonionic and anionic emulsifiers (e.g. polyoxyethylene fatty alcohol ethers, alkylsulfonates and arylsulfonates) and dispersants such as lignin-sulfite waste liquors and methylcellulose.

Suitable surfactants are alkali metal, alkaline earth metal and ammonium salts of lignosulfonic acid, naphthalenesulfonic acid, phenolsulfonic acid, dibutylnaphthalenesulfonic acid, alkylarylsulfonates, alkyl sulfates, alkylsulfonates, fatty alcohol sulfates, fatty acids and sulfated fatty alcohol glycol ethers, furthermore condensates of sulfonated naphthalene and naphthalene derivatives with formaldehyde, condensates of naphthalene or of naphthalenesulfonic acid with phenol and formaldehyde, polyoxyethylene octylphenyl ether, ethoxylated isooctylphenol, octylphenol, nonylphenol, alkylphenyl polyglycol ethers, tributylphenyl polyglycol ether, tristearylphenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors and methylcellulose.

Substances which are suitable for the preparation of directly sprayable solutions, emulsions, pastes or oil dispersions are mineral oil fractions of medium to high boiling point, such as kerosene or diesel oil, furthermore coal tar oils and oils of vegetable or animal origin, aliphatic, cyclic and aromatic hydrocarbons, for example toluene, xylene, paraffin, tetrahydronaphthalene, alkylated naphthalenes or their derivatives, methanol, ethanol, propanol, butanol, cyclohexanol, cyclohexanone, mesityl oxide, isophorone, strongly polar solvents, for example dimethyl sulfoxide, 2-pyrrolidone, N-methylpyrrolidone, butyrolactone and water.

Powders, materials for spreading and dusts can be prepared by mixing or concomitantly grinding the active substances with a solid carrier.

Granules, for example coated granules, impregnated granules and homogeneous granules, can be prepared by binding the active ingredients to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, for example, ammonium sulfate, ammonium phosphate, ammonium nitrate, ureas, and products of vegetable origin, such as cereal meal, tree bark meal, wood meal and nut-shell meal, cellulose powders and other solid carriers.

Formulations for the treatment of seed may additionally comprise binders and/or gelling agents and, if appropriate, colorants.

In general, the formulations comprise from 0.01 to 95% by weight, preferably from 0.1 to 90% by weight, in particular from 5 to 50% by weight, of the active substance. The active substances are employed in a purity of from 90% to 100%, preferably 95% to 100% (according to NMR spectrum).

For the treatment of seed, the relevant formulations will, after having been diluted by a factor of two to ten, give active substance concentrations of from 0.01 to 60% by weight, preferably 0.1 to 40% by weight, in the ready-to-use preparations.

The following are examples of formulations:

### 1. Products for dilution with water

### I) Water-soluble concentrates (SL, LS)

10 parts by weight of active substance are dissolved in 90 parts by weight of water or a water-soluble solvent. As an alternative, wetters or other adjuvants are added. The active substance dissolves upon dilution with water. This gives a formulation with an active substance content of 10% by weight.

### II) Dispersible concentrates (DC)

20 parts by weight of active substance are dissolved in 70 parts by weight of cyclohexanone with addition of 10 parts by weight of a dispersant, for example polyvinylpyrrolidone. The active substance content is 20% by weight. Dilution with water gives a dispersion.

### III) Emulsifiable concentrate (EC)

15 parts by weight of active substance are dissolved in 75 parts by weight of xylene with addition of calcium dodecylbenzenesulfonate and castor oil ethoxylate (in each case 5 parts by weight). The formulation has an active substance content of 15% by weight. Dilution with water gives an emulsion.

### IV) Emulsions (EW, EO, ES)

25 parts by weight of active substance are dissolved in 35 parts by weight of xylene with addition of calcium dodecylbenzenesulfonate and castor oil ethoxylate (in each case 5 parts by weight). This mixture is introduced into 30 parts by weight of water by means of an emulsifier (Ultraturrax) and made into a homogeneous emulsion. The formulation has an active substance content of 25% by weight.

### V) Suspensions (SC, OD, FS)

In an agitated ball mill, 20 parts by weight of active substance are comminuted with addition of 10 parts by weight of dispersants and wetters and 70 parts by weight of water or an organic solvent to give a fine active substance suspension. The active substance content in the formulation is 20% by weight. Dilution with water gives a stable suspension of the active substance.

### VI) Water-dispersible granules and water-soluble granules (WG, SG)

50 parts by weight of active substance are ground finely with addition of 50 parts by weight of dispersants and wetters and made into water-dispersible or water-soluble granules by means of technical appliances (for example extrusion, spray tower, fluidized bed). The formulation has an active substance content of 50% by weight. Dilution with water gives a stable dispersion or solution of the active substance.

### VII) Water-dispersible powders and water-soluble powders (WP, SP, SS, WS)

75 parts by weight of active substance are ground in a rotor-stator mill with addition of 25 parts by weight of dispersants, wetters and silica gel. The active substance content of the formulation is 75% by weight. Dilution with water gives a stable dispersion or solution of the active substance.

### VIII) Gel formulations (GF)

In a ball mill, 20 parts by weight of active substance, 10 parts by weight of dispersant, 1 part by weight of gelling agent and 70 parts by weight of water or of an organic solvent are mixed to give a fine suspension.

### 2. Products to be applied undiluted

### IX) Dusts (DP, DS)

5 parts by weight of active substance are ground finely and mixed intimately with 95 parts by weight of finely divided kaolin. This gives a tracking powder with an active substance content of 5% by weight.

### X) Granules (GR, FG, GG, MG)

0.5 parts by weight of active substance are ground finely and associated with 95.5 parts by weight of carriers. Current methods here are extrusion, spray-drying or the fluidized bed. This gives granules to be applied undiluted with an active substance content of 0.5% by weight.

### XI) ULV solutions (UL)

10 parts by weight of active substance are dissolved in 90 parts by weight of an organic solvent, for example xylene. This gives a product to be applied undiluted with an active substance content of 10% by weight.

Suitable formulations for the treatment of seeds are, for example:
I water-soluble concentrates (LS)
III emulsifiable concentrates (EC)
IV emulsions (ES)
V suspensions (FS)
VI water-dispersible granules and water-soluble granules (SG)
VII water-dispersible powders and water-soluble powders (WS, SS)
VIII gel formulations (GF)
IX dusts and dust-like powders (DS)

For the treatment of seed, it is preferred to use FS formulations. Usually, such formulations comprise from 1 to 800 g/l active substance, 1 to 200 g/l surfactants, 0 to 200 g/l antifreeze agent, 0 to 400 g/l binder, 0 to 200 g/l colorants and solvents, preferably water.

Preferred FS formulations of the active substances for the treatment of seed usually comprise 0.5 to 80% active substance, 0.05 to 5% wetter, 0.5 to 15% dispersant, 0.1 to 5% thickener, 5 to 20% antifreeze agent, 0.1 to 2% antifoam, 1 to 20% pigment and/or colorants, 0 to 15% adhesive or sticker, 0 to 75% filler/vehicle and 0.01 to 1% preservative.

Suitable pigments or colorants for formulations of the active substances for the treatment of seed are Pigment blue 15:4, Pigment blue 15:3, Pigment blue 15:2, Pigment blue 15:1, Pigment blue 80, Pigment yellow 1, Pigment yellow 13, Pigment red 112, Pigment red 48:2, Pigment red 48:1, Pigment red 57:1, Pigment red 53:1, Pigment orange 43, Pigment orange 34, Pigment orange 5, Pigment green 36, Pigment green 7, Pigment white 6, Pigment brown 25, Basic violet 10, Basic violet 49, Acid red 51, Acid red 52, Acid red 14, Acid blue 9, Acid yellow 23, Basic red 10, Basic red 108.

Wetters and dispersants which are suitable are, in particular the abovementioned surface-active substances. Preferred wetters are alkylnaphthalenesulfonates such as diisopropyl- or diisobutylnaphthalenesulfonates. Preferred dispersants are nonionic or anionic dispersants or mixtures of nonionic or anionic dispersants. Suitable nonionic dispersants are, in particular, ethylene oxide/propylene oxide block polymers, alkylphenol polyglycol ethers and tristryrylphenol polyglycol ethers, for example polyoxyethylene octylphenol ether, ethoxylated isooctylphenol, octylphenol, nonylphenol, alkylphenol polyglycol ether, tributylphenyl polyglycol ether, tristerylphenyl polyglycol ether, alkylaryl polyether alcohols, alcohol/ethylene oxide and fatty alcohol/ethylene oxide condensates, ethoxylated castor oil, polyoxyethylene alkyl ethers, ethoxylated polyoxypropylene, lauryl alcohol polyglycol ether acetal, sorbitol esters and methylcellulose. Suitable anionic dispersants are, in particular, alkali metal salts, alkaline earth metal salts, ammonium salts of lignosulfonic acid, naphthalenesulfonic acid, phenolsulfonic acid, dibutylnaphthalenesulfonic acid, alkylarylsulfonates, alkyl sulfates, alkyl sulfonates, fatty alcohol sulfates, fatty acids and sulfated fatty alcohol glycol ethers, furthermore arylsulfonate/formaldehyde condensates, for example condensates of sulfonated naphthalene and naphthalene derivatives of formaldehyde, condensates of naphthalene or of naphthalenesulfonic acid with phenol and formaldehyde, lignosulfonates, lignin-sulfite waste liquors, phosphated or sulfated derivatives of methylcellulose, and polyacrylic acid salts.

Antifreeze agents which can be employed are, in principle, all those substances which lower the melting point of water. The suitable antifreeze agents include alkanols such as methanol, ethanol, isopropanol, the butanols, glycol, glycerol, diethylene glycol and the like.

Thickeners which are suitable are all substances which can be employed for such purposes in agrochemical compositions, for example cellulose derivatives, polyacrylic acid derivatives, xanthan, modified clays and highly-dispersed silica.

Antifoams which can be employed are all foam-inhibitory substances which are conventional for the formulation of agrochemical active substances. Silicone antifoams and magnesium stearate are especially suitable.

Preservatives which can be used are all preservatives which may be employed for such purposes in agrochemical compositions. Examples which may be mentioned are dichlorophene, isothiazolenes such as 1,2-benzisothiazol-3(2H)-one, 2-methyl-2H-isothiazol-3-one hydrochloride, 5-chloro-2-(4-chlorobenzyl)-3(2H)-isothiazolone, 5-chloro-2-methyl-2H-isothiazol-3-one, 5-chloro-2-methyl-2H-isothiazol-3-one, 5-chloro-2-methyl-2H-isothiazol-3-one hydrochloride, 4,5-dichloro-2-cyclohexyl-4-isothiazolin-3-one, 4,5-dichloro-2-octyl-2H-isothiazol-3-one, 2-methyl-2H-isothiazol-3-one, 2-methyl-2H-isothiazol-3-one/calcium chloride complex, 2-octyl-2H-isothiazol-3-one and benzyl alcohol hemiformal.

Stickers/adhesives are added to improve the adhesion of the active ingredients to the seed after the treatment. Suitable stickers are surface-active block copolymers based on EO/PO, but also polyvinyl alcohols, polyvinylpyrrolidones, polyacrylates, polymethacrylates, polybutenes, polyisobutenes, polystyrene, polyethylenamines, polyethylenamides, polyethylenimines (Lupasol®, Polymin®), polyethers and copolymers which are derived from these polymers.

An example of a gelling agent is carrageen.

Methods which can be employed for treating the seed are, in principle, all customary methods of treating or dressing seed, such as, for example, as a dry seed treatment, as a solution for seed treatment, a water-soluble powder for seed treatment, a water-dispersible powder for the slurry treatment of seed, or by encrusting. Specifically, a procedure is followed in the treatment in which the seed is mixed, in a suitable device, for example a mixing device for solid or solid/liquid mixing partners, with the desired amount of seed treatment formulations, either as such or after previous dilution with water, until the composition is distributed uniformly on the seed. If appropriate, this is followed by a drying step.

Suitable formulations for the treatment of plants, especially the aerial part of the plants, comprise spray applications, dusts and microgranules, with spray applications being preferred.

Suitable formulations for the preparation of spray solutions to be applied undiluted are:
I water-soluble concentrates (LS)
II dispersible concentrates (DC)
III emulsifiable concentrates (EC)
IV emulsions (EW, EO)
V suspensions (SC)
VI water-dispersible granules and water-soluble granules (WG)
VII water-dispersible powders and water-soluble powders (WP, SP)

Suitable formulations for the treatment of the soil are, for example, granules and spray applications.

The total application rates (i.e. the total amount of the active substances employed in accordance with the invention) for the treatment of the aerial part of the plant are preferably 0.001 to 3 kg/ha, especially preferably 0.005 to 2 kg/ha, more preferably 0.01 to 2 kg/ha and in particular 0.01 to 1 kg/ha per season.

The total application rates (i.e. the total amount of the active substances employed in accordance with the invention) for the treatment of propagation material, especially the seed, are, for example, 0.1 to 1000 g, especially preferably 1 to 750 g, more preferably 5 to 200 g, even more preferably 10 to 150 g and in particular 20 to 150 g per 100 kg of seed.

The active substances employed in accordance with the invention can be formulated jointly or separately.

The use according to the invention, or the method according to the invention, result in a markedly reduced phytotoxic effect of the pesticide A employed combined with an essentially unaltered or even improved pesticidal, e.g. fungicidal and/or insecticidal activity.

The present invention furthermore relates to a composition (composition A), comprising dimethomorph and at least one pesticide A, where the pesticide A is selected from the group consisting of (i) insecticides and (ii) fungicides, where the insecticides in turn are selected from
(i) abamectin, spinosad, metaflumizone, fipronil, chlorantraniliprole, cyantraniliprole and tefluthrin; and
   where the fungicides in turn are selected from
(ii.) epoxiconazole, fluquiconazole, triticonazole, iprodion, tebuconazole, boscalid, carbendazim, silthiofam, fludioxonil, orysastrobin, ipconazole, prothioconazole, difenoconazole, N-(3',4',5'-trifluorobiphenyl-2-yl)-3-difluoromethyl-1-methyl-1H-pyrazole-4-carboxamide, N-[2-(1,3-dimethylbutyl)-phenyl]-1,3-dimethyl-5-fluoro-1 H-pyrazole-4-carboxamide, sedaxane, penthiopyrad, isopyrazam, fluopyram, penflufen, thiabendazole and bixafen.

Thus, the invention relates to a composition (composition A), comprising dimethomorph and at least one pesticide A, where the at least one pesticide A is selected from abamectin, spinosad, metaflumizone, fipronil, chlorantraniliprole, cyantraniliprole, tefluthrin, epoxiconazole, fluquiconazole, triticonazole, iprodion, tebuconazole, boscalid, carbendazim, silthiofam, fludioxonil, orysastrobin, ipconazole, prothioconazole, difenoconazole, N-(3',4',5'-trifluorobiphenyl-2-yl)-3-difluoromethyl-1-methyl-1H-pyrazole-4-carboxamide, N-[2-(1,3-dimethylbutyl)-phenyl]-1,3-dimethyl-5-fluoro-1 H-pyrazole-4-carboxamide, sedaxane, penthiopyrad, isopyrazam, fluopyram, penflufen, thiabendazole, bixafen and combinations thereof.

The present invention preferably relates to a composition (composition A), comprising dimethomorph and at least one pesticide A, where the pesticide A is selected from the group consisting of (i) insecticides and (ii) fungicides, where the insecticides in turn are selected from
(i) spinosad, metaflumizone, , fipronil, chlorantraniliprole (rynaxypyr) and cyantraniliprole (HGW86, cyazapyr); and
   where the fungicides in turn are selected from
(ii.) epoxiconazole, fluquiconazole, triticonazole, iprodion, tebuconazole, boscalid, carbendazim, silthiofam, fludioxonil, orysastrobin, ipconazole, prothiocaonazole, difenoconazole, N-(3',4',5'-trifluorobiphenyl-2-yl)-3-difluoromethyl-1-methyl-1 H-pyrazole-4-carboxamide, N-[2-(1,3-dimethylbutyl)-phenyl]-1,3-dimethyl-5-fluoro-1 H-pyrazole-4-carboxamide, sedaxane and penthiopyrad.

Thus, the invention preferably relates to a composition (composition A), comprising dimethomorph and at least one pesticide A, where the at least one pesticide A is selected from spinosad, metaflumizone, , fipronil, chlorantraniliprole (rynaxypyr), cyantraniliprole (HGW86, cyazapyr), epoxiconazole, fluquiconazole, triticonazole, iprodion, tebuconazole, boscalid, carbendazim, silthiofam, fludioxonil, orysastrobin, ipconazole, prothiocaonazole, difenoconazole, N-(3',4',5'-trifluorobiphenyl-2-yl)-3-difluoromethyl-1-methyl-1 H-pyrazole-4-carboxamide, N-[2-(1,3-dimethylbutyl)-phenyl]-1,3-dimethyl-5-fluoro-1 H-pyrazole-4-carboxamide, sedaxane, penthiopyrad and combinations thereof.

Preferably, the composition comprises dimethomorph and 1, 2, 3 or 4, preferably 1, 2 or 3, more preferably 1 or 2, of the above-mentioned pesticides A.

More preferably, composition A comprises dimethomorph and at least one pesticide A, where the pesticide A is selected from the group consisting of (i) insecticides and (ii) fungicides, where the insecticides in turn are selected from
(i) spinosad, metaflumizone, fipronil, chlorantraniliprole and cyantraniliprole and where the fungicides in turn are selected from
(ii.) epoxiconazole, fluquiconazole, triticonazole, iprodion, tebuconazole, carbendazim, silthiofam, fludioxonil, ipconazole, prothioconazole, difenoconazole, N-[2-(1,3-dimethylbutyl)-phenyl]-1,3-dimethyl-5-fluoro-1H-pyrazole-4-carboxamide, sedaxane and penthiopyrad,
especially in case that the composition contains only one pesticide A.

Thus, the invention more preferably relates to a composition (composition A), comprising dimethomorph and at least one pesticide A, where the at least one pesticide A is selected from spinosad, metaflumizone, fipronil, chlorantraniliprole, cyantraniliprole, epoxiconazole, fluquiconazole, triticonazole, iprodion, tebuconazole, carbendazim, silthiofam, fludioxonil, ipconazole, prothioconazole, difenoconazole, N-[2-(1,3-dimethylbutyl)-phenyl]-1,3-dimethyl-5-fluoro-1H-pyrazole-4-carboxamide, sedaxane, penthiopyrad and combinations thereof, especially in case that the composition contains only one pesticide A.

In one preferred embodiment, the composition comprises dimethomorph and at least one, preferably one or two, more preferably one, of the above-listed suitable or preferred insecticides (i).

In one alternatively preferred embodiment, the composition comprises dimethomorph and at least one, preferably one or two, more preferably one, of the above-listed suitable or preferred fungicides (ii).

Preferred compositions A containing just one pesticide A comprise dimethomorph and the pesticide A listed in Table A below, preferably in the given weight ratio.

**Table A**

| No. | Pesticide A | Weight ratio dimethomorph:pesticideA |
|---|---|---|
| | | |
| A-2 | bixafen | 50:1 to 1:50, preferably 20:1 to 1:20, more preferably 10:1 to 1:10 |
| A-3 | boscalid | 50:1 to 1:50, preferably 20:1 to 1:20, more preferably 10:1 to 1:10 |
| A-4 | carbendazim | 50:1 to 1:50, preferably 20:1 to 1:20, more preferably 10:1 to 1:10 |
| A-5 | difenoconazole | 50:1 to 1:50, preferably 20:1 to 1:20, more preferably 10:1 to 1:10 |
| A-6 | epoxiconazole | 50:1 to 1:50, preferably 20:1 to 1:20, more preferably 10:1 to 1:10 |
| A-7 | fludioxonil | 50:1 to 1:50, preferably 20:1 to 1:20, more preferably 10:1 to 1:10 |
| A-8 | fluopyram | 50:1 to 1:50, preferably 20:1 to 1:20, more preferably 10:1 to 1:10 |
| A-9 | fluquiconazole | 50:1 to 1:50, preferably 20:1 to 1:20, more preferably 10:1 to 1:10 |
| A-10 | ipconazole | 50:1 to 1:50, preferably 20:1 to 1:20, more preferably 10:1 to 1:10 |
| A-11 | iprodion | 50:1 to 1:50, preferably 20:1 to 1:20, more preferably 10:1 to 1:10 |
| A-12 | isopyrazam | 50:1 to 1:50, preferably 20:1 to 1:20, more preferably 10:1 to 1:10 |
| A-13 | metalaxyl | 50:1 to 1:50, preferably 20:1 to 1:20, more preferably 10:1 to 1:10 |
| A-14 | mefenoxam | 50:1 to 1:50, preferably 20:1 to 1:20, more preferably 10:1 to 1:10 |
| A-15 | orysastrobin | 50:1 to 1:50, preferably 20:1 to 1:20, more preferably 10:1 to 1:10 |
| A-16 | penflufen | 50:1 to 1:50, preferably 20:1 to 1:20, more preferably 10:1 to 1:10 |
| A-17 | penthiopyrad | 50:1 to 1:50, preferably 20:1 to 1:20, more preferably 10:1 to 1:10 |
| A-18 | prochloraz | 50:1 to 1:50, preferably 20:1 to 1:20, more preferably 10:1 to 1:10 |
| A-19 | prothioconazole | 50:1 to 1:50, preferably 20:1 to 1:20, more preferably 10:1 to 1:10 |
| | | |
| A-21 | sedaxane | 50:1 to 1:50, preferably 20:1 to 1:20, more preferably 10:1 to 1:10 |
| A-22 | silthiofam | 50:1 to 1:50, preferably 20:1 to 1:20, more preferably 10:1 to 1:10 |
| A-23 | tebuconazole | 50:1 to 1:50, preferably 20:1 to 1:20, more preferably 10:1 to 1:10 |
| A-24 | thiabendazole | 50:1 to 1:50, preferably 20:1 to 1:20, more preferably 10:1 to 1:10 |
| | | |
| A-26 | thiram | 50:1 to 1:50, preferably 20:1 to 1:20, more preferably 10:1 to 1:10 |
| | | |
| A-28 | triticonazole | 50:1 to 1:50, preferably 20:1 to 1:20, more preferably 10:1 to 1:10 |
| A-29 | N-(3',4',5'-trifluorobiphenyl-2-yl)-3-difluoromethyl-1-methyl-1 H-pyrazole-4-carboxamid | 50:1 to 1:50, preferably 20:1 to 1:20, more preferably 10:1 to 1:10 |
| A-30 | N-[2-(1,3-dimethylbutyl)-phenyl]-1,3-dimethyl-5-fluoro-1 H-pyrazole-4-carboxamide | 50:1 to 1:50, preferably 20:1 to 1:20, more preferably 10:1 to 1:10 |
| A-31 | abamectin | 50:1 to 1:50, preferably 20:1 to 1:20, more preferably 10:1 to 1:10 |
| | | |
| A-33 | chlorantraniliprole | 50:1 to 1:50, preferably 20:1 to 1:20, more preferably 10:1 to 1:10 |
| | | |
| A-35 | cyantraniliprole | 50:1 to 1:50, preferably 20:1 to 1:20, more preferably 10:1 to 1:10 |
| A-36 | fipronil | 50:1 to 1:50, preferably 20:1 to 1:20, more preferably 10:1 to 1:10 |
| | | |
| A-38 | metaflumizone | 50:1 to 1:50, preferably 20:1 to 1:20, more preferably 10:1 to 1:10 |
| A-39 | spinosad | 50:1 to 1:50, preferably 20:1 to 1:20, more preferably 10:1 to 1:10 |
| | | |
| A-41 | tefluthrin | 50:1 to 1:50, preferably 20:1 to 1:20, more preferably 10:1 to 1:10 |

Preference is given to the pesticides listed as No. A-4 to A-12, A-17, A-19, A-21 to A-24, A-26, A-28, A-30, A-31, A-33, A-35, A-36, A-38 and A-39. Particular preference is given to the pesticides listed as No. A-10, A-31, A-36 and A-38. Specific preference is given to the pesticides listed as No. A-10 and A-36.

In one embodiment, composition A comprises more than one pesticide A. Preferably, composition A comprises, of course apart from dimethomorph, pyraclostrobin and 1, 2 or 3 further pesticides A selected from azoxystrobin, orysastrobin, trifloxystrobin, N-(3',4',5'-trifluorobiphenyl-2-yl)-3-difluoromethyl-1-methyl-1 H-pyrazole-4-carboxamide, N-[2-(1,3-dimethylbutyl)-phenyl]-1,3-dimethyl-5-fluoro-1H-pyrazole-4-carboxamide, sedaxane, penthiopyrad, metalaxyl, abamectin, fipronil and metaflumizone;
or the composition comprises, of course apart from dimethomorph, azoxystrobin and 1, 2 or 3 further pesticides A selected from pyraclostrobin, orysastrobin, trifloxystrobin, N-(3',4',5'-trifluorobiphenyl-2-yl)-3-difluoromethyl-1-methyl-1H-pyrazole-4-carboxamide, N-[2-(1,3-dimethylbutyl)-phenyl]-1,3-dimethyl-5-fluoro-1H-pyrazole-4-carboxamide, sedaxane, penthiopyrad, metalaxyl, abamectin, fipronil and metaflumizone;
or the composition comprises, of course apart from dimethomorph, orysastrobin and 1, 2 or 3 further pesticides A selected from pyraclostrobin, azoxystrobin, trifloxystrobin, N-(3',4',5'-trifluorobiphenyl-2-yl)-3-difluoromethyl-1-methyl-1H-pyrazole-4-carboxamide, N-[2-(1,3-dimethylbutyl)-phenyl]-1,3-dimethyl-5-fluoro-1H-pyrazole-4-carboxamide, sedaxane, penthiopyrad, metalaxyl, abamectin, fipronil and metaflumizone;
or the composition comprises, of course apart from dimethomorph, trifloxystrobin and 1, 2 or 3 further pesticides A selected from pyraclostrobin, azoxystrobin, orysastrobin, N-(3',4',5'-trifluorobiphenyl-2-yl)-3-difluoromethyl-1-methyl-1H-pyrazole-4-carboxamide, N-[2-(1,3-dimethylbutyl)-phenyl]-1,3-dimethyl-5-fluoro-1H-pyrazole-4-carboxamide, sedaxane, penthiopyrad, metalaxyl, abamectin, fipronil and metaflumizone;
or the composition comprises, of course apart from dimethomorph, N-(3',4',5'-trifluorobiphenyl-2-yl)-3-difluoromethyl-1-methyl-1H-pyrazole-4-carboxamide and 1, 2 or 3 further pesticides A selected from pyraclostrobin, azoxystrobin, orysastrobin, trifloxystrobin, N-[2-(1,3-dimethylbutyl)-phenyl]-1,3-dimethyl-5-fluoro-1H-pyrazole-4-carboxamide, sedaxane, penthiopyrad, metalaxyl, abamectin, fipronil and metaflumizone;
or the composition comprises, of course apart from dimethomorph, N-[2-(1,3-dimethylbutyl)-phenyl]-1,3-dimethyl-5-fluoro-1 H-pyrazole-4-carboxamide and 1, 2 or 3 further pesticides A selected from pyraclostrobin, azoxystrobin, orysastrobin, trifloxystrobin N-(3',4',5'-trifluorobiphenyl-2-yl)-3-difluoromethyl-1-methyl-1H-pyrazole-4-carboxamide, sedaxane, penthiopyrad, metalaxyl, abamectin, fipronil and metaflumizone;
or the composition comprises, of course apart from dimethomorph, sedaxane and 1, 2 or 3 further pesticides A selected from pyraclostrobin, azoxystrobin, orysastrobin, trifloxystrobin N-(3',4',5'-trifluorobiphenyl-2-yl)-3-difluoromethyl-1-methyl-1H-pyrazole-4-carboxamide, N-[2-(1,3-dimethylbutyl)-phenyl]-1,3-dimethyl-5-fluoro-1H-pyrazole-4-carboxamide, penthiopyrad, metalaxyl, abamectin, fipronil and metaflumizone;
or the composition comprises, of course apart from dimethomorph, penthiopyrad and 1, 2 or 3 further pesticides A selected from pyraclostrobin, azoxystrobin, orysastrobin, trifloxystrobin, N-(3',4',5'-trifluorobiphenyl-2-yl)-3-difluoromethyl-1-methyl-1H-pyrazole-4-carboxamide, N-[2-(1,3-dimethylbutyl)-phenyl]-1,3-dimethyl-5-fluoro-1H-pyrazole-4-carboxamide, sedaxane, metalaxyl, abamectin, fipronil and metaflumizone;

More preferably, composition A comprises, of course apart from dimethomorph, pyraclostrobin and 1, 2 or 3 further pesticides A selected from azoxystrobin, orysastrobin, trifloxystrobin, N-(3',4',5'-trifluorobiphenyl-2-yl)-3-difluoromethyl-1-methyl-1H-pyrazole-4-carboxamide, N-[2-(1,3-dimethylbutyl)-phenyl]-1,3-dimethyl-5-fluoro-1H-pyrazole-4-carboxamide, sedaxane, penthiopyrad, metalaxyl, abamectin, fipronil and metaflumizone, preferably selected from N-(3',4',5'-trifluorobiphenyl-2-yl)-3-difluoromethyl-1-methyl-1 H-pyrazole-4-carboxamide, metalaxyl, abamectin, fipronil and metaflumizone;
or the composition comprises, of course apart from dimethomorph, N-(3',4',5'-trifluorobiphenyl-2-yl)-3-difluoromethyl-1-methyl-1H-pyrazole-4-carboxamide and 1, 2 or 3 further pesticides A selected from pyraclostrobin, azoxystrobin, orysastrobin, trifloxystrobin, N-[2-(1,3-dimethylbutyl)-phenyl]-1,3-dimethyl-5-fluoro-1H-pyrazole-4-carboxamide, sedaxane, penthiopyrad, metalaxyl, abamectin, fipronil and metaflumizone, preferably selected from pyraclostrobin, metalaxyl, abamectin, fipronil and metaflumizone.

In one embodiment, composition A comprises two pesticides A.

Specifically, composition A comprises, of course apart from dimethomorph, pyraclostrobin and fipronil.

Preferred compositions A containing two pesticides A comprise dimethomorph and the two "1^{st}" and "2^{nd}" pesticides A listed in Table B below, preferably in the given weight ratios.

**Table B**

| No. | 1^{st} Pesticide A | 2^{nd} Pesticide A | Total weight ratio DMM*:(1^{st} Pesticide A + 2^{nd} Pesticide A) |
|---|---|---|---|
| B-1 | pyraclostrobin | azoxystrobin | 50:1 to 1:50, preferably 20:1 to 1:20, more preferably 10:1 to 1:10 |
| B-2 | pyraclostrobin | orysastrobin | 50:1 to 1:50, preferably 20:1 to 1:20, more preferably 10:1 to 1:10 |
| B-3 | pyraclostrobin | trifloxystrobin | 50:1 to 1:50, preferably 20:1 to 1:20, more preferably 10:1 to 1:10 |
| B-4 | pyraclostrobin | metalaxyl | 50:1 to 1:50, preferably 20:1 to 1:20, more preferably 10:1 to 1:10 |
| B-5 | pyraclostrobin | pyrazole A** | 50:1 to 1:50, preferably 20:1 to 1:20, more preferably 10:1 to 1:10 |
| B-6 | pyraclostrobin | pyrazole B*** | 50:1 to 1:50, preferably 20:1 to 1:20, more preferably 10:1 to 1:10 |
| B-7 | pyraclostrobin | penthiopyrad | 50:1 to 1:50, preferably 20:1 to 1:20, more preferably 10:1 to 1:10 |
| B-8 | pyraclostrobin | sedaxane | 50:1 to 1:50, preferably 20:1 to 1:20, more preferably 10:1 to 1:10 |
| B-9 | pyraclostrobin | abamectin | 50:1 to 1:50, preferably 20:1 to 1:20, more preferably 10:1 to 1:10 |
| B-10 | pyraclostrobin | fipronil | 50:1 to 1:50, preferably 20:1 to 1:20, more preferably 10:1 to 1:10 |
| B-11 | pyraclostrobin | metaflumizone | 50:1 to 1:50, preferably 20:1 to 1:20, more preferably 10:1 to 1:10 |
| B-12 | azoxystrobin | orysastrobin | 50:1 to 1:50, preferably 20:1 to 1:20, more preferably 10:1 to 1:10 |
| B-13 | azoxystrobin | trifloxystrobin | 50:1 to 1:50, preferably 20:1 to 1:20, more preferably 10:1 to 1:10 |
| B-14 | azoxystrobin | metalaxyl | 50:1 to 1:50, preferably 20:1 to 1:20, more preferably 10:1 to 1:10 |
| B-15 | azoxystrobin | pyrazole A** | 50:1 to 1:50, preferably 20:1 to 1:20, more preferably 10:1 to 1:10 |
| B-16 | azoxystrobin | pyrazole B*** | 50:1 to 1:50, preferably 20:1 to 1:20, more preferably 10:1 to 1:10 |
| B-17 | azoxystrobin | penthiopyrad | 50:1 to 1:50, preferably 20:1 to 1:20, more preferably 10:1 to 1:10 |
| B-18 | azoxystrobin | sedaxane | 50:1 to 1:50, preferably 20:1 to 1:20, more preferably 10:1 to 1:10 |
| B-19 | azoxystrobin | abamectin | 50:1 to 1:50, preferably 20:1 to 1:20, more preferably 10:1 to 1:10 |
| B-20 | azoxystrobin | fipronil | 50:1 to 1:50, preferably 20:1 to 1:20, more preferably 10:1 to 1:10 |
| B-21 | azoxystrobin | metaflumizone | 50:1 to 1:50, preferably 20:1 to 1:20, more preferably 10:1 to 1:10 |
| B-22 | orysastrobin | trifloxystrobin | 50:1 to 1:50, preferably 20:1 to 1:20, more preferably 10:1 to 1:10 |
| B-23 | orysastrobin | metalaxyl | 50:1 to 1:50, preferably 20:1 to 1:20, more preferably 10:1 to 1:10 |
| B-24 | orysastrobin | pyrazole A** | 50:1 to 1:50, preferably 20:1 to 1:20, more preferably 10:1 to 1:10 |
| B-25 | orysastrobin | pyrazole B*** | 50:1 to 1:50, preferably 20:1 to 1:20, more preferably 10:1 to 1:10 |
| B-26 | orysastrobin | penthiopyrad | 50:1 to 1:50, preferably 20:1 to 1:20, more preferably 10:1 to 1:10 |
| B-27 | orysastrobin | sedaxane | 50:1 to 1:50, preferably 20:1 to 1:20, more preferably 10:1 to 1:10 |
| B-28 | orysastrobin | abamectin | 50:1 to 1:50, preferably 20:1 to 1:20, more preferably 10:1 to 1:10 |
| B-29 | orysastrobin | fipronil | 50:1 to 1:50, preferably 20:1 to 1:20, more preferably 10:1 to 1:10 |
| B-30 | orysastrobin | metaflumizone | 50:1 to 1:50, preferably 20:1 to 1:20, more preferably 10:1 to 1:10 |
| B-31 | trifloxystrobin | metalaxyl | 50:1 to 1:50, preferably 20:1 to 1:20, more preferably 10:1 to 1:10 |
| B-32 | trifloxystrobin | pyrazole A** | 50:1 to 1:50, preferably 20:1 to 1:20, more preferably 10:1 to 1:10 |
| B-33 | trifloxystrobin | pyrazole B*** | 50:1 to 1:50, preferably 20:1 to 1:20, more preferably 10:1 to 1:10 |
| B-34 | trifloxystrobin | penthiopyrad | 50:1 to 1:50, preferably 20:1 to 1:20, more preferably 10:1 to 1:10 |
| B-35 | trifloxystrobin | sedaxane | 50:1 to 1:50, preferably 20:1 to 1:20, more preferably 10:1 to 1:10 |
| B-36 | trifloxystrobin | abamectin | 50:1 to 1:50, preferably 20:1 to 1:20, more preferably 10:1 to 1:10 |
| B-37 | trifloxystrobin | fipronil | 50:1 to 1:50, preferably 20:1 to 1:20, more preferably 10:1 to 1:10 |
| B-38 | trifloxystrobin | metaflumizone | 50:1 to 1:50, preferably 20:1 to 1:20, more preferably 10:1 to 1:10 |
| B-39 | pyrazole A** | metalaxyl | 50:1 to 1:50, preferably 20:1 to 1:20, more preferably 10:1 to 1:10 |
| B-40 | pyrazole A** | pyrazole B*** | 50:1 to 1:50, preferably 20:1 to 1:20, more preferably 10:1 to 1:10 |
| B-41 | pyrazole A** | penthiopyrad | 50:1 to 1:50, preferably 20:1 to 1:20, more preferably 10:1 to 1:10 |
| B-42 | pyrazole A** | sedaxane | 50:1 to 1:50, preferably 20:1 to 1:20, more preferably 10:1 to 1:10 |
| B-43 | pyrazole A** | abamectin | 50:1 to 1:50, preferably 20:1 to 1:20, more preferably 10:1 to 1:10 |
| B-44 | pyrazole A** | fipronil | 50:1 to 1:50, preferably 20:1 to 1:20, more preferably 10:1 to 1:10 |
| B-45 | pyrazole A** | metaflumizone | 50:1 to 1:50, preferably 20:1 to 1:20, more preferably 10:1 to 1:10 |
| B-46 | pyrazole B*** | metalaxyl | 50:1 to 1:50, preferably 20:1 to 1:20, more preferably 10:1 to 1:10 |
| B-47 | pyrazole B*** | penthiopyrad | 50:1 to 1:50, preferably 20:1 to 1:20, more preferably 10:1 to 1:10 |
| B-48 | pyrazole B*** | sedaxane | 50:1 to 1:50, preferably 20:1 to 1:20, more preferably 10:1 to 1:10 |
| B-49 | pyrazole B*** | abamectin | 50:1 to 1:50, preferably 20:1 to 1:20, more preferably 10:1 to 1:10 |
| B-50 | pyrazole B*** | fipronil | 50:1 to 1:50, preferably 20:1 to 1:20, more preferably 10:1 to 1:10 |
| B-51 | pyrazole B*** | metaflumizone | 50:1 to 1:50, preferably 20:1 to 1:20, more preferably 10:1 to 1:10 |
| B-52 | penthiopyrad | metalaxyl | 50:1 to 1:50, preferably 20:1 to 1:20, more preferably 10:1 to 1:10 |
| B-53 | penthiopyrad | sedaxane | 50:1 to 1:50, preferably 20:1 to 1:20, more preferably 10:1 to 1:10 |
| B-54 | penthiopyrad | abamectin | 50:1 to 1:50, preferably 20:1 to 1:20, more preferably 10:1 to 1:10 |
| B-55 | penthiopyrad | fipronil | 50:1 to 1:50, preferably 20:1 to 1:20, more preferably 10:1 to 1:10 |
| B-56 | penthiopyrad | metaflumizone | 50:1 to 1:50, preferably 20:1 to 1:20, more preferably 10:1 to 1:10 |
| B-57 | sedaxane | metalaxyl | 50:1 to 1:50, preferably 20:1 to 1:20, more preferably 10:1 to 1:10 |
| B-58 | sedaxane | abamectin | 50:1 to 1:50, preferably 20:1 to 1:20, more preferably 10:1 to 1:10 |
| B-59 | sedaxane | fipronil | 50:1 to 1:50, preferably 20:1 to 1:20, more preferably 10:1 to 1:10 |
| B-60 | sedaxane | metaflumizone | 50:1 to 1:50, preferably 20:1 to 1:20, more preferably 10:1 to 1:10 |

| | | | |
|---|---|---|---|
| * DMM = dimethomorph ** pyrazole A = N-(3',4',5'-trifluorobiphenyl-2-yl)-3-difluoromethyl-1-methyl-1H-pyrazole-4-carboxamid *** pyrazole B = N-[2-(1,3-dimethylbutyl)-phenyl]-1,3-dimethyl-5-fluoro-1H-pyrazole-4-carboxamide | | | |

Preference is given to compositions B-1 to B-11, B-22 to B-30 and B-39 to B-45 and more preference to compositions B-1 to B-11 and B-39 to B-45. Even more preferred are compositions B-4, B-5, B-9 to B-11, B-39 and B-43 to B-45. Specifically preferred is composition B-10.

In one embodiment, composition A comprises three pesticides A.

Preferred compositions A containing three pesticides A comprise dimethomorph and the three "1^{st}", "2^{nd}" and "3^{rd}" pesticides A listed in Table C below, preferably in a total weight ratio of dimethomorph to (1^{st} Pesticide A + 2^{nd} Pesticide A + 3^{rd} Pesticide A) of from 50:1 to 1:50, preferably 20:1 to 1:20, more preferably 10:1 to 1:10.

**Table C**

| No. | 1^{st} Pesticide A | 2^{nd} Pesticide A | 3^{rd} Pesticide A |
|---|---|---|---|
| C-1 | pyraclostrobin | pyrazole A** | metalaxyl |
| C-2 | pyraclostrobin | pyrazole A** | abamectin |
| C-3 | pyraclostrobin | pyrazole A** | fipronil |
| C-4 | pyraclostrobin | pyrazole A** | metaflumizone |
| C-5 | pyraclostrobin | metalaxyl | abamectin |
| C-6 | pyraclostrobin | metalaxyl | fipronil |
| C-7 | pyraclostrobin | metalaxyl | metaflumizone |
| C-8 | pyraclostrobin | pyrazole B*** | metalaxyl |
| C-9 | pyraclostrobin | pyrazole B*** | abamectin |
| C-10 | pyraclostrobin | pyrazole B*** | fipronil |
| C-11 | pyraclostrobin | pyrazole B*** | metaflumizone |
| C-12 | pyraclostrobin | penthiopyrad | metalaxyl |
| C-13 | pyraclostrobin | penthiopyrad | abamectin |
| C-14 | pyraclostrobin | penthiopyrad | fipronil |
| C-15 | pyraclostrobin | penthiopyrad | metaflumizone |
| C-16 | pyraclostrobin | sedaxane | metalaxyl |
| C-17 | pyraclostrobin | sedaxane | abamectin |
| C-18 | pyraclostrobin | sedaxane | fipronil |
| C-19 | pyraclostrobin | sedaxane | metaflumizone |
| C-20 | azoxystrobin | pyrazole A** | metalaxyl |
| C-21 | azoxystrobin | pyrazole A** | abamectin |
| C-22 | azoxystrobin | pyrazole A** | fipronil |
| C-23 | azoxystrobin | pyrazole A** | metaflumizone |
| C-24 | azoxystrobin | metalaxyl | abamectin |
| C-25 | azoxystrobin | metalaxyl | fipronil |
| C-26 | azoxystrobin | metalaxyl | metaflumizone |
| C-27 | azoxystrobin | pyrazole B*** | metalaxyl |
| C-28 | azoxystrobin | pyrazole B*** | abamectin |
| C-29 | azoxystrobin | pyrazole B*** | fipronil |
| C-30 | azoxystrobin | pyrazole B*** | metaflumizone |
| C-31 | azoxystrobin | penthiopyrad | metalaxyl |
| C-32 | azoxystrobin | penthiopyrad | abamectin |
| C-33 | azoxystrobin | penthiopyrad | fipronil |
| C-34 | azoxystrobin | penthiopyrad | metaflumizone |
| C-35 | azoxystrobin | sedaxane | metalaxyl |
| C-36 | azoxystrobin | sedaxane | abamectin |
| C-37 | azoxystrobin | sedaxane | fipronil |
| C-38 | azoxystrobin | sedaxane | metaflumizone |
| C-39 | orysastrobin | pyrazole A** | metalaxyl |
| C-40 | orysastrobin | pyrazole A** | abamectin |
| C-41 | orysastrobin | pyrazole A** | fipronil |
| C-42 | orysastrobin | pyrazole A** | metaflumizone |
| C-43 | orysastrobin | metalaxyl | abamectin |
| C-44 | orysastrobin | metalaxyl | fipronil |
| C-45 | orysastrobin | metalaxyl | metaflumizone |
| C-46 | orysastrobin | pyrazole B*** | metalaxyl |
| C-47 | orysastrobin | pyrazole B*** | abamectin |
| C-48 | orysastrobin | pyrazole B*** | fipronil |
| C-49 | orysastrobin | pyrazole B*** | metaflumizone |
| C-50 | orysastrobin | penthiopyrad | metalaxyl |
| C-51 | orysastrobin | penthiopyrad | abamectin |
| C-52 | orysastrobin | penthiopyrad | fipronil |
| C-53 | orysastrobin | penthiopyrad | metaflumizone |
| C-54 | orysastrobin | sedaxane | metalaxyl |
| C-55 | orysastrobin | sedaxane | abamectin |
| C-56 | orysastrobin | sedaxane | fipronil |
| C-57 | orysastrobin | sedaxane | metaflumizone |
| C-58 | trifloxystrobin | pyrazole A** | metalaxyl |
| C-59 | trifloxystrobin | pyrazole A** | abamectin |
| C-60 | trifloxystrobin | pyrazole A** | fipronil |
| C-61 | trifloxystrobin | pyrazole A** | metaflumizone |
| C-62 | trifloxystrobin | metalaxyl | abamectin |
| C-63 | trifloxystrobin | metalaxyl | fipronil |
| C-64 | trifloxystrobin | metalaxyl | metaflumizone |
| C-65 | trifloxystrobin | pyrazole B*** | metalaxyl |
| C-66 | trifloxystrobin | pyrazole B*** | abamectin |
| C-67 | trifloxystrobin | pyrazole B*** | fipronil |
| C-68 | trifloxystrobin | pyrazole B*** | metaflumizone |
| C-69 | trifloxystrobin | penthiopyrad | metalaxyl |
| C-70 | trifloxystrobin | penthiopyrad | abamectin |
| C-71 | trifloxystrobin | penthiopyrad | fipronil |
| C-72 | trifloxystrobin | penthiopyrad | metaflumizone |
| C-73 | trifloxystrobin | sedaxane | metalaxyl |
| C-74 | trifloxystrobin | sedaxane | abamectin |
| C-75 | trifloxystrobin | sedaxane | fipronil |
| C-76 | trifloxystrobin | sedaxane | metaflumizone |
| C-77 | pyrazole A** | metalaxyl | abamectin |
| C-78 | pyrazole A** | metalaxyl | fipronil |
| C-79 | pyrazole A** | metalaxyl | metaflumizone |
| C-80 | pyrazole B*** | metalaxyl | abamectin |
| C-81 | pyrazole B*** | metalaxyl | fipronil |
| C-82 | pyrazole B*** | metalaxyl | metaflumizone |
| C-83 | penthiopyrad | metalaxyl | abamectin |
| C-84 | penthiopyrad | metalaxyl | fipronil |
| C-85 | penthiopyrad | metalaxyl | metaflumizone |
| C-86 | sedaxane | metalaxyl | abamectin |
| C-87 | sedaxane | metalaxyl | fipronil |
| C-88 | sedaxane | metalaxyl | metaflumizone |

| | | | |
|---|---|---|---|
| ** pyrazole A = N-(3',4',5'-trifluorobiphenyl-2-yl)-3-difluoromethyl-1-methyl-1H-pyrazole-4-carboxamid *** pyrazole B = N-[2-(1,3-dimethylbutyl)-phenyl]-1,3-dimethyl-5-fluoro-1 H-pyrazole-4-carboxamide | | | |

Among these, preference is given to compositions C-1 to C-19, C-39 to C-57 and C-77 to C-79. More preference is given to compositions C-1 to C-7 and C-77 to C-79.

In one embodiment, composition A comprises four pesticides A.

Preferred compositions A containing four pesticides A comprise dimethomorph and the four "1^{st}", "2^{nd}", "3^{rd}" and "4^{th}" pesticides A listed in Table D below, preferably in a total weight ratio of dimethomorph to (1^{st} Pesticide A + 2^{nd} Pesticide A + 3^{rd} Pesticide A + 4^{th} Pesticide A) of from 50:1 to 1:50, preferably 20:1 to 1:20, more preferably 10:1 to 1:10.

**Table D**

| No. | 1^{st} Pesticide A | 2^{nd} Pesticide A | 3^{rd} Pesticide A | 4^{th} Pesticide A |
|---|---|---|---|---|
| D-1 | pyraclostrobin | pyrazole A** | metalaxyl | abamectin |
| D-2 | pyraclostrobin | pyrazole A** | metalaxyl | fipronil |
| D-3 | pyraclostrobin | pyrazole A** | metalaxyl | metaflumizone |
| D-4 | pyraclostrobin | pyrazole B*** | metalaxyl | abamectin |
| D-5 | pyraclostrobin | pyrazole B*** | metalaxyl | fipronil |
| D-6 | pyraclostrobin | pyrazole B*** | metalaxyl | metaflumizone |
| D-7 | pyraclostrobin | penthiopyrad | metalaxyl | abamectin |
| D-8 | pyraclostrobin | penthiopyrad | metalaxyl | fipronil |
| D-9 | pyraclostrobin | penthiopyrad | metalaxyl | metaflumizone |
| D-10 | pyraclostrobin | sedaxane | metalaxyl | abamectin |
| D-11 | pyraclostrobin | sedaxane | metalaxyl | fipronil |
| D-12 | pyraclostrobin | sedaxane | metalaxyl | metaflumizone |
| D-13 | azoxystrobin | pyrazole A** | metalaxyl | abamectin |
| D-14 | azoxystrobin | pyrazole A** | metalaxyl | fipronil |
| D-15 | azoxystrobin | pyrazole A** | metalaxyl | metaflumizone |
| D-16 | azoxystrobin | pyrazole B*** | metalaxyl | abamectin |
| D-17 | azoxystrobin | pyrazole B*** | metalaxyl | fipronil |
| D-18 | azoxystrobin | pyrazole B*** | metalaxyl | metaflumizone |
| D-19 | azoxystrobin | penthiopyrad | metalaxyl | abamectin |
| D-20 | azoxystrobin | penthiopyrad | metalaxyl | fipronil |
| D-21 | azoxystrobin | penthiopyrad | metalaxyl | metaflumizone |
| D-22 | azoxystrobin | sedaxane | metalaxyl | abamectin |
| D-23 | azoxystrobin | sedaxane | metalaxyl | fipronil |
| D-24 | azoxystrobin | sedaxane | metalaxyl | metaflumizone |
| D-25 | orysastrobin | pyrazole A** | metalaxyl | abamectin |
| D-26 | orysastrobin | pyrazole A** | metalaxyl | fipronil |
| D-27 | orysastrobin | pyrazole A** | metalaxyl | metaflumizone |
| D-28 | orysastrobin | pyrazole B*** | metalaxyl | abamectin |
| D-29 | orysastrobin | pyrazole B*** | metalaxyl | fipronil |
| D-30 | orysastrobin | pyrazole B*** | metalaxyl | metaflumizone |
| D-31 | orysastrobin | penthiopyrad | metalaxyl | abamectin |
| D-32 | orysastrobin | penthiopyrad | metalaxyl | fipronil |
| D-33 | orysastrobin | penthiopyrad | metalaxyl | metaflumizone |
| D-34 | orysastrobin | sedaxane | metalaxyl | abamectin |
| D-35 | orysastrobin | sedaxane | metalaxyl | fipronil |
| D-36 | orysastrobin | sedaxane | metalaxyl | metaflumizone |
| D-37 | trifloxystrobin | pyrazole A** | metalaxyl | abamectin |
| D-38 | trifloxystrobin | pyrazole A** | metalaxyl | fipronil |
| D-39 | trifloxystrobin | pyrazole A** | metalaxyl | metaflumizone |
| D-40 | trifloxystrobin | pyrazole B*** | metalaxyl | abamectin |
| D-41 | trifloxystrobin | pyrazole B*** | metalaxyl | fipronil |
| D-42 | trifloxystrobin | pyrazole B*** | metalaxyl | metaflumizone |
| D-43 | trifloxystrobin | penthiopyrad | metalaxyl | abamectin |
| D-44 | trifloxystrobin | penthiopyrad | metalaxyl | fipronil |
| D-45 | trifloxystrobin | penthiopyrad | metalaxyl | metaflumizone |
| D-46 | trifloxystrobin | sedaxane | metalaxyl | abamectin |
| D-47 | trifloxystrobin | sedaxane | metalaxyl | fipronil |
| D-48 | trifloxystrobin | sedaxane | metalaxyl | metaflumizone |

| | | | | |
|---|---|---|---|---|
| ** pyrazole A = N-(3',4',5'-trifluorobiphenyl-2-yl)-3-difluoromethyl-1-methyl-1H-pyrazole-4-carboxamid *** pyrazole B = N-[2-(1,3-dimethylbutyl)-phenyl]-1,3-dimethyl-5-fluoro-1 H-pyrazole-4-carboxamide | | | | |

Among these, preference is given to compositions D-1 to D-12 and D-25 to D-36. More preference is given to compositions D-1 to D-3.

In a particular embodiment,
- the composition comprises pyraclostrobin and one further pesticide A selected from N-(3',4',5'-trifluorobiphenyl-2-yl)-3-difluoromethyl-1-methyl-1 H-pyrazole-4-carboxamide, metalaxyl, abamectin, fipronil and metaflumizone; or
- the composition comprises pyraclostrobin, N-(3',4',5'-trifluorobiphenyl-2-yl)-3-difluoromethyl-1-methyl-1 H-pyrazole-4-carboxamide and one further pesticide A selected from metalaxyl, abamectin, fipronil and metaflumizone; or
- the composition comprises pyraclostrobin, metalaxyl and one further pesticide A selected from N-(3',4',5'-trifluorobiphenyl-2-yl)-3-difluoromethyl-1-methyl-1H-pyrazole-4-carboxamide, abamectin, fipronil and metaflumizone; or
- the composition comprises N-(3',4',5'-trifluorobiphenyl-2-yl)-3-difluoromethyl-1-methyl-1 H-pyrazole-4-carboxamide and one further pesticide A selected from pyraclostrobin, metalaxyl, abamectin, fipronil and metaflumizone; or
- the composition comprises N-(3',4',5'-trifluorobiphenyl-2-yl)-3-difluoromethyl-1-methyl-1 H-pyrazole-4-carboxamide, pyraclostrobin and and one further pesticide A selected from metalaxyl, abamectin, fipronil and metaflumizone; or
- the composition comprises N-(3',4',5'-trifluorobiphenyl-2-yl)-3-difluoromethyl-1-methyl-1 H-pyrazole-4-carboxamide, metalaxyl and and one further pesticide A selected from pyraclostrobin, abamectin, fipronil and metaflumizone; or
- the composition comprises pyraclostrobin, N-(3',4',5'-trifluorobiphenyl-2-yl)-3-difluoromethyl-1-methyl-1 H-pyrazole-4-carboxamide, metalaxyl and and one further pesticide A selected from abamectin, fipronil and metaflumizone.

Specifically, composition A comprises
- dimethomorph, pyraclostrobin and fipronil; or
- dimethomorph and ipconazole.

The composition according to the invention may take the form of a physical mixture of at least one pesticide A with dimethomorph. However, the composition may also be any combination of the active substances, where it is not necessary for the individual active substances to be present as a joint formulation.

An example of compositions according to the invention in which the at least one pesticide and dimethomorph are not present in a joint formulation is a 2-component kit or a 3-component kit.

Accordingly, the present invention also relates to a 2-component kit, comprising a first component which comprises the at least one pesticide A, preferably one pesticide A, a liquid or solid carrier and, if appropriate, at least one surface-active substance and/or at least one customary adjuvant, and a second component which comprises dimethomorph, a liquid or solid carrier and, if appropriate, at least one surface-active substance and/or at least one customary adjuvant.

The present invention also relates to a 3-component kit, comprising a first component which comprises one pesticide A, a liquid or solid carrier and, if appropriate, at least one surface-active substance and/or at least one customary adjuvant, a second component which comprises another pesticide A different from the one in the first component, a liquid or solid carrier and, if appropriate, at least one surface-active substance and/or at least one customary adjuvant, and a third component which comprises dimethomorph, a liquid or solid carrier and, if appropriate, at least one surface-active substance and/or at least one customary adjuvant.

Suitable liquid and solid carriers, surface-active substances and customary adjuvants are described hereinabove.

The compositions according to the invention can be present in formulated form, as described above, and/or they can contain the abovementioned, additional components (for example other active substances (fungicides, insecticides, herbicides, bactericides, nematicides, fertilizers, growth regulators and the like), adjuvants, oils, wetters and the like).

As regards the suitable and preferred weight ratios of the components present in compositions of the invention, the application rates and the nature of their application, reference is made to what has been said above.

In comparison with corresponding compositions which, however, do not comprise dimethomorph, the compositions according to the invention are distinguished by a markedly reduced phytotoxicity. At the same time, their pesticidal activity is essentially unaltered or even improved. In case pesticide A is a fungicide, the compositions of the invention (in this case called composition B) are suitable for the treatment of phytopathogenic fungi.

Accordingly, the invention also relates to a method for controlling harmful fungi, which method comprises treating the fungi, their habitat or the materials, plants, seed or soils to be protected against fungal attack with a composition comprising
(1.) dimethomorph and
(2.) at least one fungicide selected from epoxiconazole, fluquiconazole, triticonazole, iprodion, tebuconazole, boscalid, carbendazim, silthiofam, fludioxonil, orysastrobin, ipconazole, prothioconazole, difenoconazole, N-(3',4',5'-trifluorobiphenyl-2-yl)- 3-difluoromethyl-1-methyl-1 H-pyrazole-4-carboxamide, N-[2-(1,3-dimethylbutyl)-phenyl]-1,3-dimethyl-5-fluoro-1 H-pyrazole-4-carboxamide, sedaxane, penthiopyrad, isopyrazam, fluopyram, penflufen, thiabendazole and bixafen; and/or
(3.) at least one insecticide selected from abamectin, spinosad, metaflumizone, fipronil, chlorantraniliprole, cyantraniliprole and tefluthrin;
in a synergistically effective amount.

Alternatively, the invention also relates to a method for controlling harmful fungi, which method comprises treating the fungi, their habitat or the materials, plants, seed or soils to be protected against fungal attack with
(1.) dimethomorph in combination with
(2.) at least one fungicide selected from epoxiconazole, fluquiconazole, triticonazole, iprodion, tebuconazole, boscalid, carbendazim, silthiofam, fludioxonil, orysastrobin, ipconazole, prothiocaonazole, difenoconazole, N-(3',4',5'-trifluorobiphenyl-2-yl)- 3-difluoromethyl-1-methyl-1 H-pyrazole-4-carboxamide, N-[2-(1,3-dimethylbutyl)-phenyl]-1,3-dimethyl-5-fluoro-1 H-pyrazole-4-carboxamide, sedaxane, penthiopyrad and combinations thereof, and preferably, and especially for the case that only one fungicide is used, from epoxiconazole, fluquiconazole, triticonazole, iprodion, thiram, tebuconazole, carbendazim, silthiofam, fludioxonil, ipconazole, prothioconazole, difenoconazole, N-[2-(1,3-dimethylbutyl)-phenyl]-1,3-dimethyl-5-fluoro-1 H-pyrazole-4-carboxamide, sedaxane, penthiopyrad and combinations thereof
in a synergistically effective amount.

The invention also relates to the use of a composition (composition B) comprising
(1.) dimethomorph and
(2.) at least one fungicide selected from epoxiconazole, fluquiconazole, triticonazole, iprodion, tebuconazole, boscalid, carbendazim, silthiofam, fludioxonil, orysastrobin, ipconazole, prothioconazole, difenoconazole, N-(3',4',5'-trifluorobiphenyl-2-yl)- 3-difluoromethyl-1-methyl-1 H-pyrazole-4-carboxamide, N-[2-(1,3-dimethylbutyl)-phenyl]-1,3-dimethyl-5-fluoro-1 H-pyrazole-4-carboxamide, sedaxane, penthiopyrad, isopyrazam, fluopyram, penflufen, thiabendazole and bixafen; and/or
(3.) at least one insecticide selected from abamectin, spinosad, metaflumizone, fipronil, chlorantraniliprole, cyantraniliprole and tefluthrin;
for controlling harmful fungi.

Alternatively, the invention also relates to the use of a composition (composition B) comprising
(1.) dimethomorph and
(2.) at least one fungicide selected from epoxiconazole, fluquiconazole, triticonazole, iprodion, tebuconazole, boscalid, carbendazim, silthiofam, fludioxonil, orysastrobin, ipconazole, prothioconazole, difenoconazole, N-(3',4',5'-trifluorobiphenyl-2-yl)-3-difluoromethyl-1-methyl-1H-pyrazole-4-carboxamide, N-[2-(1,3-dimethylbutyl)-phenyl]-1,3-dimethyl-5-fluoro-1 H-pyrazole-4-carboxamide, sedaxane, penthiopyrad and combinations thereof, and preferably, and especially for the case that only one fungicide is used, from epoxiconazole, fluquiconazole, triticonazole, iprodion, thiram, tebuconazole, carbendazim, silthiofam, fludioxonil, ipconazole, prothioconazole, difenoconazole, N-[2-(1,3-dimethylbutyl)-phenyl]-1,3-dimethyl-5-fluoro-1 H-pyrazole-4-carboxamide, sedaxane, penthiopyrad and combinations thereof,
for controlling harmful fungi.

Preferably, dimethomorph is used in combination with 1, 2 or 3, preferably 1 or 2 of the above-mentioned fungicides.

As regards the terms "in combination with" and "composition", the suitable and preferred weight ratios of the components present in compositions B of the invention, the application rates and the nature of their application, reference is made to what has been said above.

In one embodiment, composition B comprises more than one fungicide. In this case, composition B preferably comprises pyraclostrobin and 1 or 2 further fungicides selected from N-(3',4',5'-trifluorobiphenyl-2-yl)-3-difluoromethyl-1-methyl-1H-pyrazole-4-carboxamide and metalaxyl, or the composition comprises N-(3',4',5'-trifluorobiphenyl-2-yl)-3-difluoromethyl-1-methyl-1 H-pyrazole-4-carboxamide and 1 or 2 further fungicides selected from pyraclostrobin and metalaxyl.

In another embodiment, composition B comprises one fungicide and one insecticide. In this case, composition B preferably comprises pyraclostrobin and fipronil.

The composition B of the invention containing dimethomorph and the above-listed fungicides is particularly suitable for controlling the following phytopathogenic fungi:
- *Alternaria* species on vegetables, oilseed rape, sugar beet, fruit and rice, for example *A. solani or A. alternata* on potatoes and tomatoes,
- *Aphanomyces* species on sugar beet and vegetables,
- *Bipolaris* and *Drechslera* species on maize, cereals, rice and turf, for example *D. maydis* on maize,
- *Blumeria graminis* (powdery mildew) on cereals,
- *Botrytis cinerea* (gray mold) on strawberries, vegetables, flowers and grape vines,
- *Bremia lactucae* on lettuce,
- *Cercospora* species on maize, soybeans, rice and sugar beet,
- *Cochliobolus* species on maize, cereals, rice *(for example Cochliobolus sativus* on cereals, *Cochliobolus miyabeanus on* rice),
- *Colletotricum* species on soybeans and cotton,
- *Drechslera* species and *Pyrenophora* species on cereals, rice, turf and maize, for example *D. teres* on barley or *D. tritici-repentis* on wheat,
- *Esca* on grape vines, caused by *Phaeoacremonium chlamydosporium, Ph. Aleophilum,* and *Formitipora punctata* (syn. *Phellinus punctatus*),
- *Exserohilum* species on maize,
- *Erysiphe cichoracearum* and *Sphaerotheca fuliginea* on cucurbits,
- *Fusarium* and *Verticllium* species on various plants, for example *F. graminearum* or *F. culmorum* on cereals or *F. oxysporum* on a multiplicity of plants such as, for example, tomatoes,
- *Gaeumanomyces graminis* on cereals,
- *Gibberella species* on cereals and rice (for example *Gibberella fujikuroi on* rice),
- *Grainstaining complex* on rice,
- *Helminthosporium* species on maize and rice,
- *Michrodochium nivale* on cereals,
- *Mycosphaerella* species on cereals, bananas and peanuts, for example *M. graminicola* on wheat or *M. fijiensis* on bananas,
- *Peronospora* species on cabbage and bulb plants, such as, for example, *P. brassicae* on cabbage or *P. destructoron* onions,
- *Phakopsora pachyrhizi and Phakopsora meibomiae* on soybeans,
- *Phomopsis* species on soybeans and sunflowers,
- *Phytophthora infestans* on potatoes and tomatoes,
- *Phytophthora* species on a variety of plants such as, for example, *P. capsicion* capsicum,
- *Plasmopara viticola* on grape vines,
- *Podosphaera leucotricha* on apples,
- *Pseudocercosporella herpotrichoides* on cereals,
- *Pseudoperonospora* species on a variety of plants such as, for example, *P. cubensis* on cucumbers or *P. humili on* hops,
- *Puccinia* species on a variety of plants such as, for example, *P. triticina, P. striformins, P. hordei* or *P. graminis* on cereals, or *P. asparagi on* asparagus,
- *Pyrenophora* species on cereals,
- *Pyricularia oryzae, Corticium sasakii, Sarocladium oryzae, S. attenuatum, Entyloma oryzae* on rice,
- *Pyricularia grisea* on turf and cereals,
- *Pythium spp.* on turf, rice, maize, cotton, oilseed rape, sunflowers, sugar beet, vegetables and other plants, for example *P. ultiumum* on a variety of plants, *P. aphanidermatum* on turf,
- *Rhizoctonia* species on cotton, rice, turf, maize, oilseed rape, potatoes, sugar beet, vegetables and other plants, for example *R. solani* on beet and a variety of plants,
- *Rhynchosporium secalis* on barley, rye and triticale,
- *Sclerotinia* species on oilseed rape and sunflowers,
- *Septoria tritici* and *Stagonospora nodorum* on wheat,
- *Erysiphe (*syn. *Uncinula) necatoron* grape vines,
- *Setospaeria* species on maize and turf,
- *Sphacelotheca reilinia* on maize,
- *Thievaliopsis* species on soybeans and cotton,
- *Tilletia* species on cereals,
- *Ustilago* species on cereals, maize and sugar beet, for example *U. maydis* on maize, and
- *Venturia* species (scab) on apples and pears, for example *V*. *inaequalis* on apples.

Finally, the invention relates to plant propagation material, obtainable by treating it with a composition of the invention (A or B). In particular, the propagation material is coated with the composition or contains it. Preferably, the propagation material is a seed.

The term "coated with and/or contains" here signifies that dimethomorph and the at least one pesticide A are for the most part on the surface of the propagation material at the time of application, although a greater or lesser part of these active ingredients may penetrate into the propagation material, depending on the method of application. When the said propagation material is (re)planted, it may absorb the active ingredients.

Still further, the present invention relates to propagation material, especially to a seed, more especially to an unsown seed, which comprises dimethomorph and the at least one pesticide A.

According to one embodiment, such a propagation material comprising dimethomorph and the at least one pesticide A has a coating, wherein the coating comprises dimethomorph and the at least one pesticide A. According to a further embodiment, such a propagation material comprising dimethomorph and the at least one pesticide A is a seed whose germinable part and/or natural sheath, shell, pod and/or integument comprise(s) dimethomorph and the at least one pesticide A. Also, dimethomorph and the at least one pesticide A can be present in both the coating and the germinable part and/or natural sheath, shell, pod and/or integument of the seed.

Preferably, such a propagation material comprises an effective amount of dimethomorph and the at least one pesticide A.

The propagation material treated with dimethomorph and the at least one pesticide A may also be enveloped with a film overcoating to protect the dimethomorph and the at least one pesticide A-containing coating. Such overcoatings are known in the art and may be applied using conventional fluidized bed and drum film coating techniques.

The propagation material of the present invention can be used for the propagation of plants. The propagation material can be stored, handled, planted/sowed and tilled.

In principle, all customary methods of treating and in particular dressing such as coating (e.g. pelleting) and imbibing (e.g. soaking) seeds can be employed. Specifically, the treatment follows a procedure in which the propagation material is exposed to the specifically desired amount of a preparation comprising dimethomorph and the at least one pesticide A. The preparation may be a formulation that is applied as such or after previously diluting it, e.g. with water; for instance, it may be expedient to dilute seed treatment formulations 2-10 fold leading to concentrations in the ready-to-use compositions of 0.01 to 60% by weight active compound by weight, preferably 0.1 to 40% by weight.

Usually, a device which is suitable for this purpose, for example a mixer for solid or solid/liquid components, is employed until the preparation is distributed uniformly on the seed. Thus, the preparation can be applied to the propagation material by any standard seed treatment methodology, including but not limited to mixing in a container (e.g., a bottle, bag or tumbler), mechanical application, tumbling, spraying, and immersion. If appropriate, this is followed by drying.

Particular embodiments of the present invention comprise seed coating and imbibition (e.g. soaking). "Coating" denotes any process that endows the outer surfaces of the seeds partially or completely with a layer or layers of non-plant material, and "imbibition" any process that results in penetration of the active ingredient(s) into the germinable parts of the seed and/or its natural sheath, (inner) husk, hull, shell, pod and/or integument.

As to suitable seed treatment formulations, reference is made to what has been said above.

### Examples

### A. Fungicidal activity

### Microtest

The active compounds were formulated separately as a stock solution having a concentration of 10000 ppm in dimethyl sulfoxide.

### 1. Activity against the late blight pathogen Phytophthora infestans in the microtiter test (Phytin)

The stock solutions were mixed according to the ratio, pipetted onto a micro titer plate (MTP) and diluted with water to the stated concentrations. A spore suspension of *Phytophtora infestans* containing a pea juice-based aqueous nutrient medium was then added. The plates were placed in a water vapor-saturated chamber at a temperature of 18°C. Using an absorption photometer, the MTPs were measured at 405 nm 7 days after the inoculation.

### 2. Activity against leaf blotch on wheat caused by Septoria tritici (Septtr)

The stock solutions were mixed according to the ratio, pipetted onto a micro titer plate (MTP) and diluted with water to the stated concentrations. A spore suspension of *Septoria tritici* in an aqueous biomalt solution was then added. The plates were placed in a water vapor-saturated chamber at a temperature of 18°C. Using an absorption photometer, the MTPs were measured at 405 nm 7 days after the inoculation.

The measured parameters were compared to the growth of the active compound-free control variant (100%) and the fungus-free and active compound-free blank value to determine the relative growth in % of the pathogens in the respective active compounds. These percentages were converted into efficacies. An efficacy of 0 means that the growth level of the pathogens corresponds to that of the untreated control; an efficacy of 100 means that the pathogens were not growing.

The expected efficacies of active compound mixtures were determined using Colby's formula [R.S. Colby, "Calculating synergistic and antagonistic responses of herbicide combinations", Weeds 15, 20-22 (1967)] and compared with the observed efficacies.

The results are compiled in the tables below.

**Table 1. Activity against Phytophthora infestans**

| Active compound | Concentration [ppm] | Observed efficacy [%] | Caculated efficacy [%] | Synergism [%] |
|---|---|---|---|---|
| Dimethomorph | 0.25 | 51 | | |
| Acetamiprid* | 0.25 | 0 | | |
| Ipconazol | 0.063 | 2 | | |
| Dimethomorph + Acetamiprid* | 0.25 + 0.25 | 72 | 51 | 21 |
| Dimethomorph + Ipconazol | 0.25 + 0.063 | 74 | 52 | 22 |

| | | | | |
|---|---|---|---|---|
| * not according to the invention | | | | |

**Table 2. Activity against Septoria tritici**

| Active compound | Concentration [ppm] | Observed efficacy [%] | Caculated efficacy [%] | Synergism [%] |
|---|---|---|---|---|
| Dimethomorph + Fipronil | 4 + 0.004 | 8 | | |
| Pyraclostrobin | 0.004 | 49 | | |
| Dimethomorph + Fipronil + Pyraclostrobin | 4 + 0.004 + 0.004 | 75 | 53 | 22 |

### B. Safener effect of dimethomorph

Sugar beet seeds (Beretta) were pelleted either with pyraclostrobin alone or with pyraclostrobin in combination with dimethomorph. After sowing, the seeds (200 seeds per treatment, 4 repetitions) were grown for 6 days at 13 °C and then exposed to 5 °C for 7 days. Cultivation was then continued at 20 °C. During the whole cultivation period the soil was kept at 20% humidity. 7 and 8 days after sowing (DAS) germination was assessed as % of the number of sown seeds. The results are compiled in the table below.

**Table 3**

| Treatment | Concentration [g a.i./U]* | Germination [%] 7 DAS | Germination [%] 8 DAS |
|---|---|---|---|
| - ** | | 22 | 33 |
| Pyraclostrobin** | 30 | 16 | 27 |
| Pyraclostrobin** + Dimethomorph | 30 + 50 | 38 | 50 |

| | | | |
|---|---|---|---|
| * g active substance per unit; 1 unit = 100,000 seeds ** to assure pathogen-free conditions, all seeds ("untreated" and treated) were treated with 6 g/U of thiram and 14.7 g/U of hymexazole | | | |

## Claims

1. A method for reducing or preventing damage caused by pesticides A to plants treated therewith and/or to plant propagation material treated therewith and/or to plants growing from this plant propagation material and/or to plants which grow in a growth medium which has been or is treated therewith, which method comprises treating the plant propagation material and/or the plants and/or the growth medium with
(a) at least one pesticide A in combination with
(b) dimethomorph.

2. The method as claimed in claim 1, for reducing or preventing damage caused by pesticides A to plant propagation material which has been treated therewith and/or to plants growing from this plant propagation material and/or to plants which grow in a growth medium which has been or is treated therewith.

3. The method as claimed in claim 2, for reducing or preventing damage caused by pesticides A to plants growing from plant propagation material which has been treated therewith.

4. The method as claimed in claim 3, for reducing or preventing damage caused by pesticides A to plants growing from plant propagation material which has been treated therewith, where the plants are under abiotic stress while being in the growth stage 01 to 32 according to BBCH extended scale.

5. The method as claimed in any of the preceding claims, for improving the vitality, preferably the germination and/or the emergence, of the plants.

6. The method as claimed in any of the preceding claims, where the pesticide A is selected from the group consisting of (i) insecticides and (ii) fungicides,
where the insecticides are selected from
(i) abamectin, clothianidin, imidacloprid, thiamethoxam, acetamiprid, metaflumizone, fipronil, cyantraniliprole, chlorantraniliprole, alpha-cypermethrin, tefluthrin, beta-cefluthrin, fubendiamide, and spinosad;
and the fungicides are selected from
(ii) metalaxyl, mefenoxam, pyrimethanil, epoxiconazole, fluquiconazole, flutriafol, hymexazole, imazalil, metconazole, prochloraz, tebuconazole, triticonazole, iprodion, metiram, thiram, boscalid, carbendazim, silthiofam, fludioxonil, azoxystrobin, kresoxim-methyl, orysastrobin, pyraclostrobin, trifloxystrobin, thiophanate methyl, ipconazole, prothioconazole, difenoconazole, triadimenol, triazoxide, fluoxastrobin, N-(3',4',5'-trifluorobiphenyl-2-yl)-3-difluoromethyl-1-methyl-1 H-pyrazole-4-carboxamide (fluxapyroxade), N-[2-(4'-trifluoromethylthio)-biphenyl]-3-difluoromethyl-1-methyl-1 H-pyrazole-4-carboxamide, bixafen, N-[2-(1,3-dimethylbutyl)-phenyl]-1,3-dimethyl-5-fluoro-1 H-pyrazole-4-carboxamide, sedaxane, isopyrazam, penthiopyrad, thiabendazole, penflufen and fluopyram.

7. The method as claimed in claim 6, where the insecticides are selected from
(i) clothianidin, thiamethoxam and fipronil;
and the fungicides are selected from
(ii) metalaxyl, mefenoxam, triticonazole, azoxystrobin, pyraclostrobin and thiophante methyl.

8. The method as claimed in claim 7, where the pesticide A is pyraclostrobin.

9. The method as claimed in any of the preceding claims, where the plants are selected from maize (corn), wheat, triticale, rye, barley, oats, millet/sorghum, rice, sugar beet, fodder beet, lentil, vegetable pea, fodder pea, bean, alfalfa (lucerne), soybeans, oilseed rape, mustard, sunflower, groundnut (peanut), cucurbit, pumpkin/squash, cucumber, melon, watermelon, cotton, flax, hemp, jute, spinach, kale, cabbage, Chinese cabbage, lettuce, endive, asparagus, carrot, celeriac, kohlrabi, chicory, radish, swede, scorzonerea, Brussels sprout, cauliflower, broccoli, onion, leek, garlic, shallot, tomato, potato, paprika, sugar cane, tobacco, turf/grass, clover, elephant grass (Miscanthus), natural rubber plants, ornamental and forestry plants.

10. The use of dimethomorph for reducing or preventing damage caused by pesticides A to plants treated therewith, to plant propagation material treated therewith, to plants growing from plant propagation material which has been treated therewith and/or to plants which grow in a growth medium which has been or is treated therewith, where the pesticides A are as defined in any of claims 1 or 6 to 8.

11. The use as claimed in claim 10, where the plants are selected from maize (corn), wheat, triticale, rye, barley, oats, millet/sorghum, rice, sugar beet, fodder beet, lentil, vegetable pea, fodder pea, bean, alfalfa (lucerne), soybeans, oilseed rape, mustard, sunflower, groundnut (peanut), cucurbit, pumpkin/squash, cucumber, melon, watermelon, cotton, flax, hemp, jute, spinach, kale, cabbage, Chinese cabbage, lettuce, endive, asparagus, carrot, celeriac, kohlrabi, chicory, radish, swede, scorzonerea, Brussels sprout, cauliflower, broccoli, onion, leek, garlic, shallot, tomato, potato, paprika, sugar cane, tobacco, turf/grass, clover, elephant grass (Miscanthus), natural rubber plants, ornamental and forestry plants.

12. A composition comprising dimethomorph and at least one pesticide A, where the pesticide A is selected from the group consisting of (i) insecticides and (ii) fungicides, where the insecticides are selected from
(i) spinosad, metaflumizone, fipronil, chlorantraniliprole, cyantraniliprole and tefluthrin; and
where the fungicides are selected from
(ii.) epoxiconazole, fluquiconazole, triticonazole, iprodion, tebuconazole, boscalid, carbendazim, silthiofam, fludioxonil, orysastrobin, ipconazole, prothioconazole, difenoconazole, N-(3',4',5'-trifluorobiphenyl-2-yl)-3-difluoromethyl-1 -methyl-1 H-pyrazole-4-carboxamide, N-[2-(1,3-dimethylbutyl)-phenyl]-1,3-dimethyl-5-fluoro-1 H-pyrazole-4-carboxamide, sedaxane, penthiopyrad, isopyrazam, fluopyram, penflufen, thiabendazole and bixafen.

13. The composition as claimed in claim 12, comprising dimethomorph and at least one pesticide A, where the pesticide A is selected from the group consisting of (i) insecticides and (ii) fungicides, where the insecticides are selected from
(i) spinosad, metaflumizone, fipronil, chlorantraniliprole and cyantraniliprole; and
where the fungicides are selected from
(ii.) epoxiconazole, fluquiconazole, triticonazole, iprodion, tebuconazole, boscalid, carbendazim, silthiofam, fludioxonil, orysastrobin, ipconazole, prothioconazole, difenoconazole, N-(3',4',5'-trifluorobiphenyl-2-yl)-3-difluoromethyl-1 -methyl-1 H-pyrazole-4-carboxamide, N-[2-(1,3-dimethylbutyl)-phenyl]-1,3-dimethyl-5-fluoro-1 H-pyrazole-4-carboxamide, sedaxane and penthiopyrad.

14. The composition as claimed in claim 12, where the composition comprises
- dimethomorph and ipconazole.

15. The composition as claimed in claim 12, where the composition comprises as pesticides A pyraclostrobin and 1, 2 or 3 further pesticides A selected from N-(3',4',5'-trifluorobiphenyl-2-yl)-3-difluoromethyl-1-methyl-1 H-pyrazole-4-carboxamide, metalaxyl, abamectin, fipronil and metaflumizone or the composition comprises as pesticides A N-(3',4',5'-trifluorobiphenyl-2-yl)-3-difluoromethyl-1-methyl-1 H-pyrazole-4-carboxamide and 1, 2 or 3 further pesticides A selected from pyraclostrobin, metalaxyl, abamectin, fipronil and metaflumizone.

16. The composition as claimed in claim 15, where, apart dimethomorph,
- the composition comprises pyraclostrobin and one further pesticide A selected from N-(3',4',5'-trifluorobiphenyl-2-yl)-3-difluoromethyl-1-methyl-1H-pyrazole-4-carboxamide, metalaxyl, abamectin, fipronil and metaflumizone; or
- the composition comprises pyraclostrobin, N-(3',4',5'-trifluorobiphenyl-2-yl)-3-difluoromethyl-1-methyl-1 H-pyrazole-4-carboxamide and one further pesticide A selected from metalaxyl, abamectin, fipronil and metaflumizone; or
- the composition comprises pyraclostrobin, metalaxyl and one further pesticide A selected from N-(3',4',5'-trifluorobiphenyl-2-yl)-3-difluoromethyl-1-methyl-1H-pyrazole-4-carboxamide, abamectin, fipronil and metaflumizone; or
- the composition comprises N-(3',4',5'-trifluorobiphenyl-2-yl)-3-difluoromethyl-1-methyl-1 H-pyrazole-4-carboxamide and one further pesticide A selected from pyraclostrobin, metalaxyl, abamectin, fipronil and metaflumizone; or
- the composition comprises N-(3',4',5'-trifluorobiphenyl-2-yl)-3-difluoromethyl-1-methyl-1 H-pyrazole-4-carboxamide, pyraclostrobin and and one further pesticide A selected from metalaxyl, abamectin, fipronil and metaflumizone; or
- the composition comprises N-(3',4',5'-trifluorobiphenyl-2-yl)-3-difluoromethyl-1-methyl-1 H-pyrazole-4-carboxamide, metalaxyl and and one further pesticide A selected from pyraclostrobin, abamectin, fipronil and metaflumizone; or
- the composition comprises pyraclostrobin, N-(3',4',5'-trifluorobiphenyl-2-yl)-3-difluoromethyl-1-methyl-1 H-pyrazole-4-carboxamide, metalaxyl and and one further pesticide A selected from abamectin, fipronil and metaflumizone.

17. The composition as claimed in claim 16, where, apart dimethomorph, the composition comprises pyraclostrobin and fipronil.

18. Plant propagation material, coated with or containing a composition as defined in any of claims 11 to 17.

19. A method for controlling harmful fungi, which method comprises treating the fungi, their habitat or the materials, plants, seed or soils to be protected against fungal attack with a composition comprising
(1.) dimethomorph and
(2.) at least one fungicide selected from epoxiconazole, fluquiconazole, triticonazole, iprodion, tebuconazole, boscalid, carbendazim, silthiofam, fludioxonil, orysastrobin, ipconazole, prothioconazole, difenoconazole, N-(3',4',5'-trifluorobiphenyl-2-yl)- 3-difluoromethyl-1-methyl-1 H-pyrazole-4-carboxamide, N-[2-(1,3-dimethylbutyl)-phenyl]-1,3-dimethyl-5-fluoro-1H-pyrazole-4-carboxamide, sedaxane, penthiopyrad, isopyrazam, fluopyram, penflufen, thiabendazole and bixafen; and/or
(3.) at least one insecticide selected from abamectin, spinosad, metaflumizone, fipronil, chlorantraniliprole, cyantraniliprole and tefluthrin;
in a synergistically effective amount;
where the method is not a method for treating the human or animal body.

20. The method as claimed in claim 19, which method comprises treating the fungi, their habitat or the materials, plants, seed or soils to be protected against fungal attack with a composition comprising
(1.) dimethomorph and
(2.) at least one fungicide selected from epoxiconazole, fluquiconazole, triticonazole, iprodion, tebuconazole, boscalid, carbendazim, silthiofam, fludioxonil, orysastrobin, ipconazole, prothioconazole, difenoconazole, N-(3',4',5'-trifluorobiphenyl-2-yl)- 3-difluoromethyl-1-methyl-1 H-pyrazole-4-carboxamide, N-[2-(1,3-dimethylbutyl)-phenyl]-1,3-dimethyl-5-fluoro-1H-pyrazole-4-carboxamide, sedaxane and penthiopyrad
in a synergistically effective amount.

21. The method as claimed in claim 19, which method comprises treating the fungi, their habitat or the materials, plants, seed or soils to be protected against fungal attack with a composition comprising
- dimethomorph and ipconazole; or
- dimethomorph, fipronil and pyraclostrobin.

## Patentansprüche

1. Verfahren zum Verringern oder Vorbeugen von Schaden, verursacht durch Pestizide A an damit behandelten Pflanzen und/oder an damit behandeltem pflanzlichem Vermehrungsgut und/oder an Pflanzen, die aus diesem pflanzlichen Vermehrungsgut heranwachsen und/oder an Pflanzen, die in einem Wachstumssubtrat wachsen, das damit behandelt worden ist oder behandelt wird, wobei das Verfahren das Behandeln des pflanzlichen Vermehrungsguts und/oder der Pflanzen und/oder des Wachstumssubstrats mit
(a) mindestens einem Pestizid A in Kombination mit
(b) Dimethomorph,
umfasst.

2. Verfahren nach Anspruch 1 zum Verringern oder Vorbeugen von Schaden, verursacht durch Pestizide A an pflanzlichem Vermehrungsgut, das damit behandelt worden ist, und/oder an Pflanzen, die aus diesem pflanzlichen Vermehrungsgut heranwachsen und/oder an Pflanzen, die in einem Wachstumssubstrat wachsen, das damit behandelt worden ist oder behandelt wird.

3. Verfahren nach Anspruch 2 zum Verringern oder Vorbeugen von Schaden, verursacht durch Pestizide A an Pflanzen, die aus pflanzlichem Vermehrungsgut, das damit behandelt worden ist, heranwachsen.

4. Verfahren nach Anspruch 3 zum Verringern oder Vorbeugen von Schaden, verursacht durch Pestizide A an Pflanzen, die aus pflanzlichem Vermehrungsgut, das damit behandelt worden ist, heranwachsen, wobei sich die Pflanzen unter abiotischem Stress befinden, während sie sich im Wachstumsstadium 01 bis 32 gemäß der erweiterten BBCH-Skala befinden.

5. Verfahren nach einem der vorhergehenden Ansprüche zum Verbessern der Vitalität, vorzugweise der Keimung und/oder des Auflaufens, der Pflanzen.

6. Verfahren nach einem der vorhergehenden Ansprüche, wobei das Pestizid A aus der Gruppe bestehend aus (i) Insektiziden und (ii) Fungiziden ausgewählt ist, wobei die Insektizide aus
(i) Abamectin, Clothianidin, Imidacloprid, Thiamethoxam, Acetamiprid, meta-Flumizon, Fipronil, Cyantraniliprol, Chlorantraniliprol, alpha-Cypermethrin, Tefluthrin, beta-Cefluthrin, Fubendiamid und Spinosad ausgewählt sind;
und die Fungizide aus
(ii) Metalaxyl, Mefenoxam, Pyrimethanil, Epoxiconazol, Fluquiconazol, Flutriafol, Hymexazol, Imazalil, Metconanzol, Prochloraz, Tebuconazol, Triticonazol, Iprodion, Metiram, Thiram, Boscalid, Carbendazim, Silthiofam, Fludioxonil, Azoxystrobin, Kresoxim-methyl, Orysastrobin, Pyraclostrobin, Trifloxystrobin, Thiophanat-methyl, Ipconazol, Prothioconazol, Difenoconazol, Triadimenol, Triazoxid, Fluoxastrobin, N-(3',4',5'-Trifluorbiphenyl-2-yl)-3-difluormethyl-1-methyl-1H-pyrazol-4-carboxamid (Fluxapyroxad), N-[2-(4'-Trifluormethylthio)-biphenyl]-3-difluormethyl-1-methyl-1H-pyrazol-4-carboxamid, Bixafen, N-[2-(1,3-Dimethylbutyl)-phenyl]-1,3-dimethyl-5-fluor-1H-pyrazol-4-carboxamid, Sedaxan, Isopyrazam, Penthiopyrad, Thiabendazol, Penflufen und Fluopyram ausgewählt sind.

7. Verfahren nach Anspruch 6, wobei die Insektizide aus
(i) Clothianidin, Thiamethoxam und Fipronil ausgewählt sind;
und die Fungizide aus
(ii) Metalaxyl, Mefenoxam, Triticonazol, Azoxystrobin, Pyraclostrobin und Thiophanat-methyl ausgewählt sind.

8. Verfahren nach Anspruch 7, wobei es sich bei dem Pestizid A um Pyraclostrobin handelt.

9. Verfahren nach einem der vorhergehenden Ansprüche, wobei die Pflanzen aus Mais, Weizen, Triticale, Roggen, Gerste, Hafer, Hirse/Mohrenhirse, Reis, Zuckerrübe, Futterrübe, Linse, Gemüseerbse, Futtererbse, Bohne, Alfalfa (Luzerne), Sojabohnen, Raps, Senf, Sonnenblume, Erdnuss, Cucurbitacee, Kürbis, Gurke, Melone, Wassermelone, Baumwolle, Flachs, Hanf, Jute, Spinat, Grünkohl, Weißkohl, Chinakohl, Salat, Endivie, Spargel, Karotte, Knollensellerie, Kohlrabi, Chicoree, Rettich/Radieschen, Steckrübe, Schwarzwurzel, Rosenkohl, Blumenkohl, Brokkoli, Zwiebel, Lauch, Knoblauch, Schalotte, Tomate, Kartoffel, Paprika, Zuckerrohr, Tabak, Rasen/Gras, Klee, Elefantengras (Miscanthus), Naturkautschukpflanzen, Zierpflanzen und Forstpflanzen ausgewählt sind.

10. Verwendung von Dimethomorph zum Verringern oder Vorbeugen von Schaden, verursacht durch Pestizide A an damit behandelten Pflanzen, an damit behandeltem pflanzlichem Vermehrungsgut, an Pflanzen, die aus damit behandeltem pflanzlichem Vermehrungsgut heranwachsen und/oder an Pflanzen, die in einem Wachstumssubtrat wachsen, das damit behandelt worden ist oder behandelt wird, wobei die Pestizide A wie in einem der Ansprüche 1 oder 6 bis 8 definiert sind.

11. Verwendung nach Anspruch 10, wobei die Pflanzen aus Mais, Weizen, Triticale, Roggen, Gerste, Hafer, Hirse/Mohrenhirse, Reis, Zuckerrübe, Futterrübe, Linse, Gemüseerbse, Futtererbse, Bohne, Alfalfa (Luzerne), Sojabohnen, Raps, Senf, Sonnenblume, Erdnuss, Cucurbitacee, Kürbis, Gurke, Melone, Wassermelone, Baumwolle, Flachs, Hanf, Jute, Spinat, Grünkohl, Weißkohl, Chinakohl, Salat, Endivie, Spargel, Karotte, Knollensellerie, Kohlrabi, Chicoree, Rettich/Radieschen, Steckrübe, Schwarzwurzel, Rosenkohl, Blumenkohl, Brokkoli, Zwiebel, Lauch, Knoblauch, Schalotte, Tomate, Kartoffel, Paprika, Zuckerrohr, Tabak, Rasen/Gras, Klee, Elefantengras (Miscanthus), Naturkautschukpflanzen, Zierpflanzen und Forstpflanzen ausgewählt sind.

12. Zusammensetzung, die Dimethomorph und mindestens ein Pestizid A umfasst, wobei das Pestizid A aus der Gruppe bestehend aus (i) Insektiziden und (ii) Fungiziden ausgewählt ist, wobei die Insektizide aus
(i) Spinosad, Metaflumizon, Fipronil, Chlorantraniliprol, Cyantraniliprol und Tefluthrin ausgewählt sind; und
wobei die Fungizide aus
(ii) Epoxiconazol, Fluquiconazol, Triticonazol, Iprodion, Tebuconazol, Boscalid, Carbendazim, Silthiofam, Fludioxonil, Orysastrobin, Ipconazol, Prothioconazol, Difenoconazol, N-(3',4',5'-Trifluorbiphenyl-2-yl)-3-difluormethyl-1-methyl-1H-pyrazol-4-carboxamid, N-[2-(1,3-Dimethylbutyl)phenyl]-1,3-dimethyl-5-fluor-1H-pyrazol-4-carboxamid, Sedaxan, Penthiopyrad, Isopyrazam, Fluopyram, Penflufen, Thiabendazol und Bixafen ausgewählt sind.

13. Zusammensetzung nach Anspruch 12, die Dimethomorph und mindestens ein Pestizid A umfasst, wobei das Pestizid A aus der Gruppe bestehend aus (i) Insektiziden und (ii) Fungiziden ausgewählt ist, wobei die Insektizide aus
(i) Spinosad, Metaflumizon, Fipronil, Chlorantraniliprol und Cyantraniliprol ausgewählt sind; und
wobei die Fungizide aus
(ii) Epoxiconazol, Fluquiconazol, Triticonazol, Iprodion, Tebuconazol, Boscalid, Carbendazim, Silthiofam, Fludioxonil, Orysastrobin, Ipconazol, Prothioconazol, Difenoconazol, N-(3',4',5'-Trifluorbiphenyl-2-yl)-3-difluormethyl-1-methyl-1H-pyrazol-4-carboxamid, N-[2-(1,3-Dimethylbutyl)phenyl]-1,3-dimethyl-5-fluor-1H-pyrazol-4-carboxamid, Sedaxan und Penthiopyrad ausgewählt sind.

14. Zusammensetzung nach Anspruch 12, wobei die Zusammensetzung
- Dimethomorph und Ipconazol umfasst.

15. Zusammensetzung nach Anspruch 12, wobei die Zusammensetzung als Pestizide A Pyraclostrobin und 1, 2 oder 3 weitere Pestizide A, ausgewählt aus N-(3',4',5'-Trifluorbiphenyl-2-yl)-3-difluormethyl-1-methyl-1H-pyrazol-4-carboxamid, Metalaxyl, Abamectin, Fipronil und Metaflumizon, oder die Zusammensetzung als Pestizide A N-(3',4',5'-Trifluorbiphenyl-2-yl)-3-difluormethyl-1-methyl-1H-pyrazol-4-carboxamid und 1, 2 oder 3 weitere Pestizide A, ausgewählt aus Pyraclostrobin, Metalaxyl, Abamectin, Fipronil und Metaflumizon, umfasst.

16. Zusammensetzung nach Anspruch 15, wobei, außer Dimethomorph,
- die Zusammensetzung Pyraclostrobin und ein weiteres Pestizid A, ausgewählt aus N-(3',4',5'-Trifluorbiphenyl-2-yl)-3-difluormethyl-1-methyl-1H-pyrazol-4-carboxamid, Metalaxyl, Abamectin, Fipronil und Metaflumizon, umfasst; oder
- die Zusammensetzung Pyraclostrobin, N-(3',4',5'-Trifluorbiphenyl-2-yl)-3-difluormethyl-1-methyl-1H-pyrazol-4-carboxamid und ein weiteres Pestizid A, ausgewählt aus Metalaxyl, Abamectin, Fipronil und Metaflumizon, umfasst; oder
- die Zusammensetzung Pyraclostrobin, Metalaxyl und ein weiteres Pestizid A, ausgewählt aus N-(3',4',5'-Trifluorbiphenyl-2-yl)-3-difluormethyl-1-methyl-1H-pyrazol-4-carboxamid, Abamectin, Fipronil und Metaflumizon, umfasst; oder
- die Zusammensetzung N-(3',4',5'-Trifluorbiphenyl-2-yl)-3-difluormethyl-1-methyl-1H-pyrazol-4-carboxamid und ein weiteres Pestizid A, ausgewählt aus Pyraclostrobin, Metalaxyl, Abamectin, Fipronil und Metaflumizon, umfasst; oder
- die Zusammensetzung N-(3',4',5'-Trifluorbiphenyl-2-yl)-3-difluormethyl-1-methyl-1H-pyrazol-4-carboxamid, Pyraclostrobin und ein weiteres Pestizid A, ausgewählt aus Metalaxyl, Abamectin, Fipronil und Metaflumizon, umfasst; oder
- die Zusammensetzung N-(3',4',5'-Trifluorbiphenyl-2-yl)-3-difluormethyl-1-methyl-1H-pyrazol-4-carboxamid, Metalaxyl und ein weiteres Pestizid A, ausgewählt aus Pyraclostrobin, Abamectin, Fipronil und Metaflumizon, umfasst; oder
- die Zusammensetzung Pyraclostrobin, N-(3',4',5'-Trifluorbiphenyl-2-yl)-3-difluormethyl-1-methyl-1H-pyrazol-4-carboxamid, Metalaxyl und ein weiteres Pestizid A, ausgewählt aus Abamectin, Fipronil und Metaflumizon, umfasst.

17. Verbindung nach Anspruch 16, wobei, außer Dimethomorph, die Zusammensetzung Pyraclostrobin und Fipronil umfasst.

18. Pflanzliches Vermehrungsgut, beschichtet mit oder enthaltend eine(r) wie in einem der Ansprüche 11 bis 17 definierte(n) Zusammensetzung.

19. Verfahren zur Bekämpfung von Schadpilzen, wobei das Verfahren das Behandeln der Pilze, ihres Lebensraums oder der Materialien, Pflanzen, des Saatguts oder der Böden, die gegen Pilzbefall zu schützen sind, mit einer Zusammensetzung umfassend
(1.) Dimethomorph und
(2.) mindestens ein Fungizid, ausgewählt aus Epoxiconazol, Fluquiconazol, Triticonazol, Iprodion, Tebuconazol, Boscalid, Carbendazim, Silthiofam, Fludioxonil, Orysastrobin, Ipconazol, Prothioconazol, Difenoconazol, N-(3',4',5'Trifluorbiphenyl-2-yl)-3-difluormethyl-1-methyl-1H-pyrazol-4-carboxamid, N-[2-(1,3-Dimethylbutyl)phenyl]-1,3-dimethyl-5-fluor-1H-pyrazol-4-carboxamid, Sedaxan, Penthiopyrad, Isopyrazam, Fluopyram, Penflufen, Thiabendazol und Bixafen, und/oder
(3.) mindestens ein Insektizid, ausgewählt aus Abamectin, Spinosad, Metaflumizon, Fipronil, Chlorantraniliprol, Cyantraniliprol und Tefluthrin,
in einer synergistisch wirksamen Menge umfasst; wobei es sich bei dem Verfahren nicht um ein Verfahren für die Behandlung des menschlichen oder tierischen Körpers handelt.

20. Verfahren nach Anspruch 19, wobei das Verfahren das Behandeln der Pilze, ihres Lebensraums oder der Materialien, Pflanzen, des Saatguts oder der Böden, die gegen Pilzbefall zu schützen sind, mit einer Zusammensetzung umfassend
(1.) Dimethomorph und
(2.) mindestens ein Fungizid, ausgewählt aus Epoxiconazol, Fluquiconazol, Triticonazol, Iprodion, Tebuconazol, Boscalid, Carbendazim, Silthiofam, Fludioxonil, Orysastrobin, Ipconazol, Prothioconazol, Difenoconazol, N-(3',4',5'Trifluorbiphenyl-2-yl)-3-difluormethyl-1-methyl-1H-pyrazol-4-carboxamid, N-[2-(1,3-Dimethylbutyl)phenyl]-1,3-dimethyl-5-fluor-1H-pyrazol-4-carboxamid, Sedaxan und Penthiopyrad,
in einer synergistisch wirksamen Menge umfasst.

21. Verfahren nach Anspruch 19, wobei das Verfahren das Behandeln der Pilze, ihres Lebensraums oder der Materialien, Pflanzen, des Saatguts oder der Böden, die gegen Pilzbefall zu schützen sind, mit einer Zusammensetzung umfassend
- Dimethomorph und Ipconazol; oder
- Dimethomorph, Fipronil und Pyraclostrobin umfasst.

## Revendications

1. Méthode de réduction ou de prévention de dommages causés par les pesticides A à des plantes traitées par ceux-ci et/ou du matériel de propagation végétal traité par ceux-ci et/ou des plantes se développant à partir de ce matériel de propagation végétal et/ou des plantes qui se développent dans un milieu de culture ayant été traité ou étant traité par ceux-ci, laquelle méthode comprend le traitement du matériel de propagation végétal et/ou des plantes et/ou du milieu de culture par
(a) au moins un pesticide A en combinaison avec
(b) du diméthomorph.

2. Méthode selon la revendication 1, de réduction ou de prévention de dommages causés par les pesticides A à du matériel de propagation végétal ayant été traité par ceux-ci, et/ou des plantes se développant à partir de ce matériel de propagation végétal et/ou des plantes qui se développent dans un milieu de culture ayant été traité ou étant traité par ceux-ci.

3. Méthode selon la revendication 2, de réduction ou de prévention de dommages causés par les pesticides A à des plantes se développant à partir de matériel de propagation végétal ayant été traité par ceux-ci.

4. Méthode selon la revendication 3, de réduction ou de prévention de dommages causés par les pesticides A à des plantes se développant à partir de matériel de propagation végétal ayant été traité par ceux-ci, où les plantes subissent un stress abiotique tout en étant au stade de développement 01 à 32 selon l'échelle BBCH améliorée.

5. Méthode selon l'une quelconque des revendications précédentes, d'amélioration de la vitalité, de préférence de la germination et/ou de l'émergence, des plantes.

6. Méthode selon l'une quelconque des revendications précédentes, **caractérisée en ce que** le pesticide A est choisi dans le groupe constitué par (i) les insecticides et (ii) les fongicides,
où les insecticides sont choisis parmi
(i) l'abamectine, la clothianidine, l'imidacloprid, le thiaméthoxam, l'acétamipride, la métaflumizone, le fipronil, le cyantraniliprole, le chloranthraniliprole, l'alpha-cyperméthrine, la téfluthrine, la bêta-cyfluthrine, le flubendiamide, et le spinosad ;
et les fongicides sont choisis parmi
(ii) le métalaxyle, le méfénoxam, le pyriméthanil, l'époxiconazole, le fluquiconazole, le flutriafol, l'hyméxazol, l'imazalil, le metconazole, le prochloraz, le tébuconazole, le triticonazole, l'iprodion, le métiram, le thiram, le boscalide, le carbendazime, le silthiofam, le fludioxonil, l'azoxystrobine, le krésoxime-méthyle, l'orysastrobine, la pyraclostrobine, la trifloxystrobine, le thiophanate-méthyle, l'ipconazole, le prothioconazole, le difénoconazole, le triadiménol, le triazoxide, la fluoxastrobine, le N-(3',4',5'-trifluorobiphényl-2-yl)-3-difluorométhyl-1-méthyl-1H-pyrazole-4-carboxamide (fluxapyroxade), le N-[2-(4'-trifluorométhylthio)-biphényl]-3-difluorométhyl-1-méthyl-1H-pyrazole-4-carboxamide, le bixafène, le N-[2-(1,3-diméthylbutyl)-phényl]-1,3-diméthyl-5-fluoro-1H-pyrazole-4-carboxamide, le sédaxane, l'isopyrazam, le penthiopyrad, le thiabendazole, le penflufène et le fluopyram.

7. Méthode selon la revendication 6, **caractérisée en ce que** les insecticides sont choisis parmi
(i) la clothianidine, le thiaméthoxam et le fipronil ; et les fongicides sont choisis dans le groupe constitué par
(ii) le métalaxyle, le méfénoxam, le triticonazole, l'azoxystrobine, la pyraclostrobine et le thiophanate-méthyle.

8. Méthode selon la revendication 7, **caractérisée en ce que** le pesticide A est la pyraclostrobine.

9. Méthode selon l'une quelconque des revendications précédentes, **caractérisée en ce que** les plantes sont choisies parmi le maïs, le blé, le triticale, le seigle, l'orge, l'avoine, le millet/sorgho, le riz, la betterave à sucre, la betterave fourragère, la lentille, le pois, le pois fourrager, le haricot, l'alfalfa (luzerne), le soja, le colza, la moutarde, le tournesol, l'arachide (cacahuète), les cucurbitacées, la citrouille/courge, le concombre, le melon, la pastèque, le coton, le lin, le chanvre, le jute, l'épinard, le chou frisé, le chou, le chou de Chine, la laitue, l'endive, l'asperge, la carotte, le céleri-rave, le chou-rave, la chicorée, le radis, le rutabaga, le scorsonère, le chou de Bruxelles, le chou-fleur, le brocoli, l'oignon, le poireau, l'ail, l'échalote, la tomate, la pomme de terre, le paprika, la canne à sucre, le tabac, le gazon/l'herbe, le trèfle, l'herbe à éléphant (*Miscanthus*), les plantes à caoutchouc naturelles, les plantes ornementales et forestières.

10. Utilisation de diméthomorph pour réduire ou prévenir des dommages causés par les pesticides A à des plantes traitées par ceux-ci, à du matériel de propagation végétal traité par ceux-ci, à des plantes se développant à partir de matériel de propagation végétal traité par ceux-ci et/ou à des plantes qui se développent dans un milieu de culture ayant été traité ou étant traité par ceux-ci, où les pesticides A sont tels que définis selon l'une quelconque des revendications 1 ou 6 à 8.

11. Utilisation selon la revendication 10, **caractérisée en ce que** les plantes sont choisies parmi le maïs, le blé, le triticale, le seigle, l'orge, l'avoine, le millet/sorgho, le riz, la betterave à sucre, la betterave fourragère, la lentille, le pois, le pois fourrager, le haricot, l'alfalfa (luzerne), le soja, le colza, la moutarde, le tournesol, l'arachide (cacahuète), les cucurbitacées, la citrouille/courge, le concombre, le melon, la pastèque, le coton, le lin, le chanvre, le jute, l'épinard, le chou frisé, le chou, le chou de Chine, la laitue, l'endive, l'asperge, la carotte, le céleri-rave, le chou-rave, la chicorée, le radis, le rutabaga, le scorsonère, le chou de Bruxelles, le chou-fleur, le brocoli, l'oignon, le poireau, l'ail, l'échalote, la tomate, la pomme de terre, le paprika, la canne à sucre, le tabac, le gazon/l'herbe, le trèfle, l'herbe à éléphant (*Miscanthus*), les plantes à caoutchouc naturelles, les plantes ornementales et forestières.

12. Composition comprenant du diméthomorph et au moins un pesticide A, **caractérisée en ce que** le pesticide A est choisi dans le groupe constitué par (i) les insecticides et (ii) les fongicides,
où les insecticides sont choisis parmi
(i) le spinosad, la métaflumizone, le fipronil, le chloranthraniliprole, le cyantraniliprole et la téfluthrine ; et
où les fongicides sont choisis parmi
(ii) l'époxiconazole, le fluquiconazole, le triticonazole, l'iprodion, le tébuconazole, le boscalide, le carbendazime, le silthiofam, le fludioxonil, l'orysastrobine, l'ipconazole, le prothioconazole, le difénoconazole, le N-(3',4',5'-trifluorobiphényl-2-yl)-3-difluorométhyl-1-méthyl-1H-pyrazole-4-carboxamide, le N-[2-(1,3-diméthylbutyl)-phényl]-1,3-diméthyl-5-fluoro-1H-pyrazole-4-carboxamide, le sédaxane, le penthiopyrad, l'isopyrazam, le fluopyram, le penflufène, le thiabendazole et le bixafène.

13. Composition selon la revendication 12, comprenant du diméthomorph et au moins un pesticide A, **caractérisée en ce que** le pesticide A est choisi dans le groupe constitué par (i) les insecticides et (ii) les fongicides,
où les insecticides sont choisis parmi
(i) le spinosad, la métaflumizone, le fipronil, le chloranthraniliprole et le cyantraniliprole ; et
où les fongicides sont choisis parmi
(ii) l'époxiconazole, le fluquiconazole, le triticonazole, l'iprodion, le tébuconazole, le boscalide, le carbendazime, le silthiofam, le fludioxonil, l'orysastrobine, l'ipconazole, le prothioconazole, le difénoconazole, le N-(3',4',5'-trifluorobiphényl-2-yl)-3-difluorométhyl-1-méthyl-1H-pyrazole-4-carboxamide, le N-[2-(1,3-diméthylbutyl)-phényl]-1,3-diméthyl-5-fluoro-1H-pyrazole-4-carboxamide, le sédaxane et le penthiopyrad.

14. Composition selon la revendication 12, **caractérisée en ce que** la composition comprend
- du diméthomorph et de l'ipconazole.

15. Composition selon la revendication 12, **caractérisée en ce que** la composition comprend, comme pesticides A, de la pyraclostrobine et 1, 2 ou 3 autres pesticides A choisis parmi le N-(3',4',5'-trifluorobiphényl-2-yl)-3-difluorométhyl-1-méthyl-1H-pyrazole-4-carboxamide, le métalaxyle, l'abamectine, le fipronil et la métaflumizone, ou la composition comprend, comme pesticides A, du N-(3',4',5'-trifluorobiphényl-2-yl)-3-difluorométhyl-1-méthyl-1H-pyrazole-4-carboxamide et 1, 2 ou 3 autres pesticides A choisis parmi la pyraclostrobine, le métalaxyle, l'abamectine, le fipronil et la métaflumizone.

16. Composition selon la revendication 15, **caractérisée en ce que**, outre le diméthomorph,
- la composition comprend de la pyraclostrobine et un autre pesticide A choisi parmi le N-(3',4',5'-trifluorobiphényl-2-yl)-3-difluorométhyl-1-méthyl-1H-pyrazole-4-carboxamide, le métalaxyle, l'abamectine, le fipronil et la métaflumizone ; ou
- la composition comprend de la pyraclostrobine, du N-(3',4',5'-trifluorobiphényl-2-yl)-3-difluorométhyl-1-méthyl-1H-pyrazole-4-carboxamide et un autre pesticide A choisi parmi le métalaxyle, l'abamectine, le fipronil et la métaflumizone ; ou
- la composition comprend de la pyraclostrobine, du métalaxyle et un autre pesticide A choisi parmi le N-(3',4',5'-trifluorobiphényl-2-yl)-3-difluorométhyl-1-méthyl-1H-pyrazole-4-carboxamide, l'abamectine, le fipronil et la métaflumizone ; ou
- la composition comprend du N-(3',4',5'-trifluorobiphényl-2-yl)-3-difluorométhyl-1-méthyl-1H-pyrazole-4-carboxamide et un autre pesticide A choisi parmi la pyraclostrobine, le métalaxyle, l'abamectine, le fipronil et la métaflumizone ; ou
- la composition comprend du N-(3',4',5'-trifluorobiphényl-2-yl)-3-difluorométhyl-1-méthyl-1H-pyrazole-4-carboxamide, de la pyraclostrobine et un autre pesticide A choisi parmi le métalaxyle, l'abamectine, le fipronil et la métaflumizone ; ou
- la composition comprend du N-(3',4',5'-trifluorobiphényl-2-yl)-3-difluorométhyl-1-méthyl-1H-pyrazole-4-carboxamide, du métalaxyle et un autre pesticide A choisi parmi la pyraclostrobine, l'abamectine, le fipronil et la métaflumizone ; ou
- la composition comprend de la pyraclostrobine, du N-(3',4',5'-trifluorobiphényl-2-yl)-3-difluorométhyl-1-méthyl-1H-pyrazole-4-carboxamide, du métalaxyle et un autre pesticide A choisi parmi l'abamectine, le fipronil et la métaflumizone.

17. Composition selon la revendication 16, **caractérisée en ce que**, outre le diméthomorph, la composition comprend de la pyraclostrobine et du fipronil.

18. Matériel de propagation végétal, enrobé ou contenant une composition telle que définie selon l'une quelconque des revendications 11 à 17.

19. Méthode de contrôle de champignons néfastes, laquelle méthode comprend le traitement des champignons, de leur habitat ou des matériels, plantes, semences ou sols devant être protégés contre une attaque fongique, par une composition comprenant
(1) du diméthomorph et
(2) au moins un fongicide choisi parmi l'époxiconazole, le fluquiconazole, le triticonazole, l'iprodion, le tébuconazole, le boscalide, le carbendazime, le silthiofam, le fludioxonil, l'orysastrobine, l'ipconazole, le prothioconazole, le difénoconazole, le N-(3',4',5'-trifluorobiphényl-2-yl)-3-difluorométhyl-1-méthyl-1H-pyrazole-4-carboxamide, le N-[2-(1,3-diméthylbutyl)-phényl]-1,3-diméthyl-5-fluoro-1H-pyrazole-4-carboxamide, le sédaxane, le penthiopyrad, l'isopyrazam, le fluopyram, le penflufène, le thiabendazole et le bixafène ; et/ou
(3) au moins un insecticide choisi parmi l'abamectine, le spinosad, la métaflumizone, le fipronil, le chloranthraniliprole, le cyantraniliprole et la téfluthrine ;
selon une quantité efficace sur le plan synergique ; **caractérisée en ce que** la méthode n'est pas une méthode de traitement du corps humain ou animal.

20. Méthode selon la revendication 19, laquelle méthode comprend le traitement des champignons, de leur habitat ou des matériels, plantes, semences ou sols devant être protégés contre une attaque fongique, par une composition comprenant
(1) du diméthomorph et
(2) au moins un fongicide choisi parmi l'époxiconazole, le fluquiconazole, le triticonazole, l'iprodion, le tébuconazole, le boscalide, le carbendazime, le silthiofam, le fludioxonil, l'orysastrobine, l'ipconazole, le prothioconazole, le difénoconazole, le N-(3',4',5'-trifluorobiphényl-2-yl)-3-difluorométhyl-1-méthyl-1H-pyrazole-4-carboxamide, le N-[2-(1,3-diméthylbutyl)-phényl]-1,3-diméthyl-5-fluoro-1H-pyrazole-4-carboxamide, le sédaxane et le penthiopyrad,
selon une quantité efficace sur le plan synergique.

21. Méthode selon la revendication 19, laquelle méthode comprend le traitement des champignons, de leur habitat ou des matériels, plantes, semences ou sols devant être protégés contre une attaque fongique, par une composition comprenant
- du diméthomorph et de l'ipconazole ; ou
- du diméthomorph, du fipronil et de la pyraclostrobine.
